# EUROPÄISCHE PATENTSCHRIFT

(11) **EP 2 809 963 B1**
(45) Veröffentlichungstag und Bekanntmachung des Hinweises auf die Patenterteilung: **16.03.2016**
(21) Anmeldenummer: 13700083.2
(22) Anmeldetag: 08.01.2013
(51) Int. Cl.: F16D 13/72, F16D 25/0638

(54) **KUPPLUNGSANORDNUNG**
CLUTCH ARRANGEMENT
ENSEMBLE EMBRAYAGE

(30) Priorität: 02.02.2012 DE 102012201510
(43) Veröffentlichungstag der Anmeldung: 10.12.2014
(73) Patentinhaber: ZF Friedrichshafen AG, 88046 Friedrichshafen (DE)
(72) Erfinder: SCHRÖDER, Arthur, 97456 Dittelbrunn (DE); SUDAU, Jörg, 97464 Niederwerrn (DE); PITTNER, Daniel, 97218 Gerbrunn (DE)
(86) Internationale Anmeldenummer: PCT/EP2013/050199
(87) Internationale Veröffentlichungsnummer: WO 2013/113529

(56) Entgegenhaltungen:
- WO-A1-02/070913
- WO-A1-03/036118
- DE-A1- 10 109 497
- DE-A1- 10 110 897
- DE-C1- 19 720 575
- FR-A1- 2 291 410
- US-A1- 2003 062 235

## Beschreibung

Ausführungsbeispiele beziehen sich auf eine Kupplungsanordnung, wie sie beispielsweise bei einem Antriebsstrang eines Fahrzeugs, beispielsweise eines Kraftfahrzeugs, zum Einsatz kommen kann.

Kupplungen werden in einer Vielzahl unterschiedlicher Ausprägungen im Fahrzeugbereich, insbesondere im Kraftfahrzeugbereich eingesetzt. Häufig werden sie hier im Rahmen eines Antriebsstrangs eines Fahrzeugs zur Drehmomentübertragung herangezogen, wobei sie beispielsweise zwischen einem Antriebsaggregat, also beispielsweise einem Motor, und einem nachgeschalteten Getriebe zum Einsatz kommen. Hierdurch kann eine Trennung des Antriebsstrangs ermöglicht werden, sodass beispielsweise auch im Falle eines Stillstands des Fahrzeugs der Motor weiterlaufen kann. Die Kupplung trennt in diesem Fall also die sich drehende Motorausgangswelle von einer stillstehenden Getriebeeingangswelle.

Kupplungen können auch bei anderen Konstellationen im Antriebsstrang eines Fahrzeugs eingesetzt werden. So können sie beispielsweise im Falle von Hybridantrieben gegebenenfalls auch zwischen zwei unterschiedlichen Antriebsaggregaten, oder auch zur wechselseitigen Trennung und Kopplung verschiedener Antriebsaggregate im Zusammenhang mit einer Getriebeeingangswelle herangezogen werden. Kupplungen können hierbei im Zusammenhang mit unterschiedlichen Antriebsaggregattechnologien, also beispielsweise Verbrennungsmotoren und Elektromotoren, sowie im Zusammenhang mit verschiedenen Getriebetechniken verwendet werden. Sie können so beispielsweise im Zusammenhang mit synchronisierten, aber auch unsynchronisierten Getrieben zum Einsatz kommen. Auch kann es sich bei den betreffenden Getrieben um ein manuell geschaltetes Getriebe oder auch um ein Automatikgetriebe handeln, bei dem gegebenenfalls über elektrische, elektronische oder andere Steuerimpulse auch manuelle Gangwechsel einleitbar sind.

Kupplungen basieren hierbei häufig auf der Schaffung eines reibschlüssigen Kontaktes zwischen entsprechenden Bauteilen, die mit einem Antriebsbauteil und einem Abtriebsbauteil der betreffenden Kupplung gekoppelt sind. Gerade im Falle stark unterschiedlicher Drehzahlen, wie sie beispielsweise beim Anfahren auftreten können, wird hierbei im Bereich der betreffenden Reibflächen Energie in Wärme umgesetzt, die zu einer unerwünschten Aufheizung der betreffenden Reibflächen bzw. der entsprechenden Bauteile führen kann. Aus diesem Grund werden beispielsweise Kupplungen eingesetzt, bei denen im Inneren eines Gehäuses Öl zirkuliert, welches die an den Reibflächen generierte Wärme von diesen abführt.

So bezieht sich die DE 10 2009 016 414 A1 auf eine Kupplungsanordnung, bei der in einem Gehäuse der Kupplungsanordnung eine entsprechende Ölströmung aufgebaut wird. Auch die DE 101 25 628 A1 bezieht sich auf eine Kupplungsanordnung, bei der wenigstens ein Reiborgan zur Erzeugung einer reibschlüssigen Verbindung derart ausgebildet ist, um von dem Öl umströmt zu werden, wobei über die Reiborgane die Drehmomentübertragung erfolgt.

Zur Steigerung des Stroms eines solchen Fluides kann beispielsweise eine Kühlmediumverteileinrichtung verwendet, wie sie beispielsweise in der EP 1 813 831 A1 beschrieben ist. Diese weist Stege oder Rampen auf, die in unterschiedlichen Geometrien ausgefertigt sein können. Gerade in räumlich beengten Situationen kann es jedoch gegebenenfalls nur schwer möglich sein, eine entsprechende Kühlmediumverteileinrichtung zu implementieren.

Die WO 02/070913 A1 bezieht sich auf eine Kupplungsanordnung mit einer mit einem Fluid gefüllten oder füllbaren Gehäuseanordnung. Die DE 101 09 497 A1 beschreibt eine vollgefüllte Nasslaufkupplung mit hydrodynamischer Kühlung unter Ausnutzung von Förderschaufeln. Die DE 101 10 897 A1 beschreibt eine trockenlaufende Kupplung für den Antriebsstrang eines Kraftfahrzeugs. Die FR 2 291 410 bezieht sich auf ein Verfahren zum Kühlen einer Kupplung über ein Ölbad und eine entsprechende Kupplung. Die WO 03/036118 A1 beschreibt eine Kupplungsanordnung, während die DE 197 20 575 C1 einen Drehmomentwandler mit Vertiefungen im Erstreckungsbereich der Reibbeläge und die US 2003/0062235 A1 ein Gehäuse einer trockenlaufenden Reibkupplungsanordnung beschreiben.

Es besteht daher ein Bedarf, einen Kompromiss zwischen der Schaffung eines Stroms eines flüssigen Mediums und eines Bauraumbedarfs bei einer Kupplungsanordnung zu verbessern.

Diesem Bedarf trägt eine Kupplungsanordnung gemäß Patentanspruch 1 Rechnung.

Eine Kupplungsanordnung, beispielsweise für einen Antriebsstrang eines Fahrzeugs, gemäß einem Ausführungsbeispiel umfasst so ein wenigstens abschnittsweise scheibenförmiges erstes Bauteil, das an dem scheibenförmigen Abschnitt eine erste Reibfläche aufweist, und ein wenigstens abschnittsweise scheibenförmiges zweites Bauteil, das an dem scheibenförmigen Abschnitt eine zweite Reibfläche aufweist, wobei die erste und die zweite Reibfläche derart ausgebildet und angeordnet sind, um miteinander in einen Reibeingriff bringbar zu sein und in einem Betrieb mit einem flüssigen Medium in Kontakt zu stehen. Eine Kupplungsanordnung umfasst ferner ein Förderbauteil, das eine Förderfläche für das flüssige Medium umfasst, und das mit einem Antriebsbauteil im Wesentlichen drehfest derart gekoppelt ist, sodass die Förderfläche einen Strom des flüssigen Mediums bei einer Drehung relativ zu dem flüssigen Medium bewirkt. Das Förderbauteil steht über die Förderfläche derart mit dem ersten Bauteil in Eingriff, dass bei einer Drehung des Förderbauteils das erste Bauteil in eine Drehung versetzt wird.

Ausführungsbeispielen einer Kupplungsanordnung liegt so die Erkenntnis zugrunde, dass eine Verbesserung eines Kompromisses zwischen dem Schaffen eines Stroms des flüssigen Mediums und dem hierzu notwendigen Bauraumbedarf dadurch verbessert werden kann, dass das zur Schaffung des Stroms verwendete Förderbauteil ebenso zur Drehmomentübertragung herangezogen wird. Zu diesem Zweck steht das Förderbauteil gerade über die Förderfläche mit dem ersten Bauteil in Eingriff, sodass durch die Drehung des Förderbauteils auch das erste Bauteil in Drehung versetzt wird. Hierdurch kann es also möglich sein, den Strom des flüssigen Mediums durch das gleiche Bauteil, ja sogar durch die gleiche Förderfläche bewirken zu lassen, die auch für den Antrieb des ersten Bauteils und damit für die Drehmomentübertragung verwendet wird. Es kann daher möglich sein, mit Hilfe einer Kupplungsanordnung gemäß einem Ausführungsbeispiel einen größeren Strom des flüssigen Mediums bei konstantem Bauraumbedarf zu schaffen, den Bauraumbedarf bei konstant gehaltenem Strom des flüssigen Mediums zu verringern oder einen Kompromiss zwischen beiden Zielsetzungen zu erzielen, bei dem sowohl der Strom des flüssigen Mediums vergrößert wird, wie auch der Bauraumbedarf reduziert wird.

Bei der Kupplungsanordnung gemäß einem Ausführungsbeispiel steht hierbei das Förderbauteil mit dem ersten Bauteil im Wesentlichen nur über die Förderfläche in Eingriff. Hierdurch kann es gegebenenfalls möglich sein, den zuvor genannten Kompromiss weiter zu verbessern, da beispielsweise zusätzliche Antriebs- oder Abtriebsstrukturen einsparbar sein können.

So kann es sich bei dem ersten Bauteil bei einer Kupplungsanordnung gemäß einem Ausführungsbeispiel beispielsweise um eine Lamelle, also beispielsweise eine Innenlamelle oder eine Außenlamelle, jedoch auch um ein anderes entsprechendes Bauteil handeln, welches abtriebsseitig zur Drehmomentübertragung verwendet wird.

Bei einer Kupplungsanordnung gemäß einem Ausführungsbeispiel kann das erste Bauteil über eine Mitnehmerfläche derart mit dem Förderbauteil in Eingriff stehen, dass eine Berührfläche zwischen der Mitnehmerfläche und der Förderfläche höchstens 50 % einer Fläche der Förderfläche ist. Hierdurch kann es möglich sein, das Förderbauteil mit der wenigstens einen Förderfläche auf einen möglichst hohen bzw. den Anforderungen angemessenen Strom des flüssigen Mediums anzupassen. Bei anderen Ausführungsbeispielen kann die Berührfläche auch höchstens 30 %, 25 %, 20 %, 15 % oder höchstens 10 % einer Fläche der Förderfläche sein. Hierbei kann es gegebenenfalls ratsam sein, die Berührfläche hinsichtlich einer Mindestgröße jedoch derart zu bemaβen, dass diese größer als ein vorbestimmter Wert ist, um eine mechanisch stabile Übertragung des Drehmoments von dem Förderbauteil über die Förderfläche und die Mitnehmerfläche auf das erste Bauteil zu ermöglichen. Dieser Wert kann natürlich von der konkreten Ausgestaltung der Kupplungsanordnung abhängen.

Bei einer Kupplungsanordnung gemäß einem Ausführungsbeispiel kann die Förderfläche zusammenhängend und eben sein. Hierdurch kann es möglich sein, nicht nur eine Herstellung des Förderbauteils zu vereinfachen, da aufwendige Geometrien der Förderfläche gegebenenfalls vermeidbar sind, es kann ergänzend oder alternativ gerade in beengten Bauraumverhältnissen eine gezieltere Ausrichtung des Stroms des flüssigen Mediums erzielbar sein.

Bei einer Kupplungsanordnung gemäß einem Ausführungsbeispiel kann die Förderfläche im Wesentlichen senkrecht zu einer tangentialen Richtung ausgerichtet sein, die senkrecht auf einer Drehachse des ersten Bauteils und einer von der Drehachse senkrecht wegweisenden radialen Richtung steht. Die Drehachse, bei der es sich um Drehachse im mathematischen Sinn handelt, um die sich das erste Bauteil bei einer entsprechenden Bewegung des Förderbauteils dreht, stimmt hierbei im Wesentlichen mit einer Drehachse des zweiten Bauteils und bei vielen Ausführungsbeispielen ebenfalls mit einer Drehachse des Antriebsbauteils überein. Die Drehachse wird daher auch als Drehachse der Kupplungsanordnung bezeichnet.

Durch die im Wesentlichen senkrecht zu der tangentialen Richtung ausgerichtete Förderfläche des Förderbauteils kann es möglich sein, eine axiale Belastung des ersten Bauteils und mit ihm verbundener weiterer Komponenten zu reduzieren, da aufgrund der Ausrichtung der entsprechenden Förderfläche senkrecht zu der tangentialen Richtung im Wesentlichen keine axialen Kraftkomponenten übertragen werden. Entsprechend kann auch die Mitnehmerfläche des ersten Bauteils im Wesentlichen senkrecht zu der tangentialen Richtung ausgerichtet sein. Es kann jedoch gegebenenfalls auch möglich sein, durch eine entsprechende Ausrichtung der Förderfläche den in der Kupplungsanordnung herrschenden Strom des flüssigen Mediums vorteilhaft zu beeinflussen. So kann es beispielsweise, optional im Zusammenspiel mit weiteren Komponenten der Kupplungsanordnung, möglich sein, durch die entsprechende Ausrichtung der Förderflächen einen von den Förderflächen ausgehenden, im Wesentlichen radial nach außen führenden Strom des flüssigen Mediums zu erzielen.

Bei einer Kupplungsanordnung gemäß einem Ausführungsbeispiel kann das Förderbauteil eine Mehrzahl von Förderflächen aufweisen, die entlang eines Umfangs des Förderbauteils verteilt angeordnet sind. Hierdurch kann es möglich sein, eine Kraftübertragung bzw. eine Drehmomentübertragung auf das erste Bauteil zu erhöhen, da die entsprechenden Kräfte auf eine entsprechend höhere Anzahl von Förderflächen aufgeteilt werden.

Bei einer Kupplungsanordnung gemäß einem Ausführungsbeispiel kann das Förderbauteil im Wesentlichen ringförmig ausgebildet sein. Hierdurch kann gegebenenfalls eine Herstellung des Förderbauteils vereinfacht werden. Ergänzend oder alternativ hierzu kann jedoch auch ein Bauraum für das Förderbauteil entsprechend verringerbar sein.

Bei einer solchen Kupplungsanordnung kann das Förderbauteil einstückig ausgebildet sein. Alternativ kann das Förderbauteil auch eine Mehrzahl von ringsegmentförmigen Förderbauteilsegmenten umfassen, wobei jedes ringsegmentförmige Förderbauteilsegment einstückig ausgebildet ist. Die Förderbauteilsegmente der Mehrzahl von Förderbauteilsegmenten können hierbei im Wesentlichen identisch, jedoch auch abweichend voneinander ausgeführt sein. Durch die einstückige Ausbildung des Förderbauteils kann es möglich sein, ein aufwendiges Herstellungsverfahren zu vermeiden, bei dem gegebenenfalls mehrere Komponenten des Förderbauteils durch Schaffen einer formschlüssigen, stoffschlüssigen und/oder kraftschlüssigen Verbindung miteinander verbunden werden müssen. Gleiches gilt ebenfalls für die Förderbauteilsegmente, wobei diese gegebenenfalls eine vereinfachte Montage und/oder Herstellung des Förderbauteils im Rahmen der Kupplungsanordnung ermöglichen. Im Unterschied hierzu kann die Ausgestaltung als einstückiges Förderbauteil jedoch auch eine Vereinfachung der Gesamtherstellung der Kupplungsanordnung aufgrund geringerer Teilzahlen und/oder einen geringeren Arbeitsaufwand für die Fertigung ermöglichen. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Hierbei kommt eine kraftschlüssige Verbindung durch Haftreibung, eine stoffschlüssige Verbindung durch molekulare oder atomare Wechselwirkungen und Kräfte und eine formschlüssige Verbindung durch geometrische Verbindung der betreffenden Verbindungspartner zustande. Die Haftreibung setzt somit insbesondere eine Normalkraftkomponente zwischen den beiden Verbindungspartnern voraus.

Bei einer solchen Kupplungsanordnung gemäß einem Ausführungsbeispiel kann das Förderbauteil oder die ringsegmentförmigen Förderbauteilsegmente durch ein Umformen eines blechartigen Werkstücks, durch ein spanabhebendes oder ein gusstechnisches Herstellungsverfahren hergestellt werden. Gerade im Falle eines durch ein Umformen eines blechartigen Werkstücks hergestelltes Förderbauteil bzw. Förderbauteilsegment kann so ein kostengünstiges und einfaches Herstellungsverfahren umsetzbar sein, was jedoch für viele Einsatzgebiete eine entsprechende Stabilität aufweist. Bei beispielsweise anspruchsvolleren Anwendungen kann es jedoch gegebenenfalls ratsam sein, aufwendigere Herstellungsverfahren, nämlich ein spanabhebendes oder auch ein gusstechnisches Herstellungsverfahren zum Herstellen des Förderbauteils bzw. der Förderbauteilsegmente zu verwenden.

Bei einer Kupplungsanordnung gemäß einem Ausführungsbeispiel kann das Antriebsbauteil ein mit dem flüssigen Medium befüllbares oder befülltes Gehäuse sein. Das Förderbauteil kann dann durch eine im Wesentlichen formschlüssige Verbindung mit dem Gehäuse verbunden sein, um die im Wesentlichen drehfeste Kopplung des Förderbauteils mit dem Antriebsbauteil zu bewirken. Hierdurch kann es also möglich sein, eine besonders kompakte Bauweise einer entsprechenden Kupplungsanordnung umzusetzen, bei der das Gehäuse der Kupplungsanordnung direkt als Antriebsbauteil verwendet wird.

Bei einer solchen Kupplungsanordnung gemäß einem Ausführungsbeispiel kann das Förderbauteil durch eine Nietverbindung und/oder Steckverbindung mit dem Gehäuse drehfest verbunden sein. Hierdurch kann eine vergleichsweise einfache und trotzdem mechanisch stabile formschlüssige und drehfeste Verbindung des Förderbauteils mit dem Gehäuse bewirkt werden. Hierdurch kann es also möglich sein, mit vergleichsweise konstruktiv einfachen Mitteln die notwendige Übertragung auch größerer Drehmomente von dem Gehäuse auf das Förderbauteil und weiter zu dem ersten Bauteil zu ermöglichen.

Eine Kupplungsanordnung gemäß einem Ausführungsbeispiel, bei der das Antriebsbauteil ein mit dem flüssigen Medium befüllbares oder befülltes Gehäuse ist, kann ferner ein Anpresselement aufweisen, das ausgebildet und angeordnet ist, um auf eine Betätigung hin die erste und die zweite Reibfläche miteinander in den Reibeingriff zu bringen und/oder den Reibeingriff zu trennen. Das Förderbauteil kann hierbei mit dem Anpresselement drehfest, beispielsweise durch eine Nietverbindung und/oder eine Steckverbindung, verbunden sein, wobei das Gehäuse mit einem Verbindungsbauteil drehfest, beispielsweise durch eine Nietverbindung und/oder eine Steckverbindung, verbunden ist. Das Verbindungsbauteil kann ferner mit dem Förderbauteil im Wesentlichen drehfest, beispielsweise durch eine Nietverbindung und/oder eine Steckverbindung, verbunden sein. Bei einer solchen Kupplungsanordnung gemäß einem Ausführungsbeispiel kann also das Förderbauteil unmittelbar mit dem Anpresselement verbunden sein, während das Förderbauteil über das Verbindungsbauteil mit dem als Antriebsbauteil dienenden Gehäuse verbinden ist. Hierdurch wird also eine Drehung des Anpresselements über das Verbindungsbauteil und das Förderbauteil bei einer Drehung des Gehäuses erzwungen. Entsprechend wird auch bei einer entsprechenden Verlangsamung des Antriebsbauteils das Anpresselement mit abgebremst. Es wird somit eine freie Rotation des Anpresselements bei bestimmten Betriebssituationen der Kupplungsanordnung, also bei bestimmten Fahrsituationen eines entsprechenden Fahrzeugs, reduziert bzw. unterbunden. Hierdurch kann es gegebenenfalls möglich sein, eine unbeabsichtigte Geräuschentwicklung aus der Kupplungsanordnung zu reduzieren oder sogar zu vermeiden.

Bei einer solchen Kupplungsanordnung gemäß einem Ausführungsbeispiel kann das Verbindungsbauteil eine Mehrzahl von Blattfederelementen aufweisen, die mit dem Förderbauteil formschlüssig, beispielsweise durch eine Nietverbindung und/oder eine Steckverbindung, verbunden sind, um die im Wesentlichen drehfeste Verbindung zwischen dem Förderbauteil und dem Verbindungsbauteil zu schaffen. Die Verwendung der entsprechenden Blattfederelemente kann so eine im Wesentlichen drehfeste Verbindung ermöglichen, kann jedoch gleichzeitig eine Bewegung des Anpresselements und damit des Förderelements entlang der Drehachse, die auch als axiale Richtung bezeichnet wird, ermöglichen. Aufgrund von gegebenenfalls eintretenden Deformationen der Blattfederelemente durch einwirkende Drehmomente und/oder eine axiale Verschiebung des Verbindungsbauteils entlang der Drehachse wird so zumindest eine im Wesentlichen drehfeste Verbindung geschaffen. Beispielsweise aufgrund der vorgenannten Effekte kann es jedoch zu einer leichten Verdrehung der entsprechend verbundenen Komponenten zueinander kommen. Die Verwendung von Blattfederelementen kann darüber hinaus eine leichtere Herstellung und/oder gegebenenfalls auch eine gewichtsmäßig leichtere Implementierung eines Verbindungsbauteils ermöglichen.

Bei einer Kupplungsanordnung gemäß einem Ausführungsbeispiel, bei der das Antriebsbauteil das Gehäuse ist, kann das erste Bauteil ein scheibenförmiges Bauteil mit einer zentralen Ausnehmung umfassen, wobei die Reibfläche an einer im Wesentlichen senkrecht zu der Drehachse ausgerichteten Hauptoberfläche des scheibenförmigen Bauteils angeordnet ist. Der Eingriff mit dem Förderbauteil kann hierbei an einer Seitenfläche eines in die zentrale Ausnehmung hineinragenden Abschnitts des scheibenförmigen Bauteils erfolgen, wobei das zweite Bauteil ein weiteres scheibenförmiges Bauteil mit einer zentralen Ausnehmung umfasst, wobei das weitere scheibenförmige Bauteil an einem Außenradius desselben mit einem Träger in Eingriff steht. Das erste Bauteil kann daher eine Innenlamelle, das zweite Bauteil eine Außenlamelle darstellen. So kann das zweite Bauteil eine weitere Mitnehmerfläche an einer Seitenfläche eines der zentralen Ausnehmung abgewandten Abschnitts des weiteren scheibenförmigen Bauteils aufweisen, über die das zweite Bauteil mit dem Träger in Eingriff steht. Entsprechend kann der Träger ebenfalls eine entsprechende Mitnehmerfläche aufweisen. Eine solche Kupplungsanordnung kann gerade eine sehr kompakte Bauweise ermöglichen.

Eine solche Kupplungsanordnung gemäß einem Ausführungsbeispiel kann ferner ein Anpresselement aufweisen, das ausgebildet und angeordnet ist, um auf eine Betätigung hin die erste und die zweite Reibfläche miteinander in den Reibeingriff zu bringen und/oder den Reibeingriff zu trennen, wobei das Anpresselement wenigstens teilweise ein von dem flüssigen Medium gefülltes erstes Volumen begrenzt, das in einer Querschnittsebene, in der die Drehachse verläuft, eine Querschnittsfläche umfasst, die höchstens ein 20-Faches einer Querschnittsfläche der Förderfläche in der Querschnittsebene entspricht. Die Förderfläche durchwandert bei einer solchen Kupplungsanordnung gemäß einem Ausführungsbeispiel somit bei einer Drehung das erste Volumen in einem nicht unerheblichen Maße und führt so in dem ersten Volumen zu dem beschriebenen Strom des flüssigen Mediums. Hierdurch kann gerade in dem ersten Volumen mithilfe der Förderfläche ein nicht unerheblicher Strom des flüssigen Mediums bereitgestellt werden, der beispielsweise zur Kühlung bzw. dem Wärmeabtransport von den Reibflächen dient. Bei anderen Ausführungsbeispielen kann die Querschnittsfläche des ersten Volumens in der Querschnittsebene auch höchstens ein 15-Faches, höchstens ein 10-Faches, höchstens ein 7,5-Faches, höchstens ein 5-Faches, höchstens ein 3-Faches oder höchstens ein 2-Faches der Förderfläche entsprechen.

Bei einer solchen Kupplungsanordnung gemäß einem Ausführungsbeispiel kann das Anpresselement eine Durchlassöffnung in das erste Volumen für das flüssige Medium aufweisen, die entlang der radialen Richtung auf Höhe der Förderfläche oder näher zu der Drehachse angeordnet ist. Das erste und/oder das zweite Bauteil sowie der Träger können hierbei von dem flüssigen Medium in einem Betriebszustand, in dem der Reibeingriff besteht, von dem flüssigen Medium durchströmbar sind, sodass bei einer Drehung der Förderfläche gegenüber dem flüssigen Medium ein Strom desselben radial nach außen durch die oder entlang der ersten und/oder der zweiten Reibfläche von der Förderfläche hervorgerufen wird. Bei einem solchen Ausführungsbeispiel kann also das erste Volumen im Wesentlichen durch das Gehäuse, das erste und das zweite Bauteil sowie das Anpresselement begrenzt werden. Selbstverständlich kann auch das Verbindungsbauteil oder ein anderes entsprechendes Bauteil das erste Volumen weiter begrenzen. Hierzu kann insbesondere ein Dichtelement zählen.

Bei dem flüssigen Medium kann es sich grundsätzlich um jede Flüssigkeit handeln, die geeignet ist, eine in einem Schlupfzustand an den Reibflächen entstehende Wärmemenge abzuführen. So kann es sich beispielsweise bei dem flüssigen Medium um ein Öl handeln, welches über eine externe Fluidversorgung der Kupplungsanordnung bereitgestellt wird.

Die Kupplungsanordnung gemäß einem Ausführungsbeispiel kann beispielsweise eine Einscheibenkupplung, eine Zweischeibenkupplung oder - allgemein gesprochen - eine Mehrscheibenkupplung darstellen. Sie kann beispielsweise eine Anfahrkupplung im Zusammenhang mit einem unsynchronisierten Getriebe (z. B. Automatikgetriebe) oder eine Trennkupplung im Zusammenhang mit einem synchronisierten Getriebe darstellen.

Nachfolgend werden unter Bezugnahme auf die beigefügten Figuren Ausführungsbeispiele näher beschrieben und erläutert.
Fig. 1 zeigt eine Querschnittsdarstellung durch eine Kupplungsanordnung gemäß einem Ausführungsbeispiel;
Fig. 2 zeigt eine perspektivische Darstellung des Förderbauteils der Kupplungsanordnung aus Fig. 1;
Fig. 3 zeigt eine perspektivische Darstellung eines Förderbauteilsegments einer Kupplungsanordnung gemäß einem Ausführungsbeispiel;
Fig. 4 zeigt eine Querschnittsdarstellung einer weiteren Kupplungsanordnung gemäß einem weiteren Ausführungsbeispiel;
Fig. 5 zeigt eine perspektivische Darstellung eines möglichen Förderbauteils der Kupplungsanordnung aus Fig. 4;
Fig. 6 zeigt eine perspektivische Darstellung eines Förderbauteilsegments einer Kupplungsanordnung gemäß einem Ausführungsbeispiel;
Fig. 7 zeigt eine Querschnittsdarstellung einer weiteren Kupplungsanordnung gemäß einem Ausführungsbeispiel;
Fig. 8 zeigt eine Querschnittsdarstellung einer weiteren Kupplungsanordnung gemäß einem Ausführungsbeispiel; und
Fig. 9 zeigt eine Querschnittsdarstellung einer weiteren Kupplungsanordnung gemäß einem Ausführungsbeispiel.

Bei der nachfolgenden Beschreibung der beigefügten Figuren, die Ausführungsformen der vorliegenden Erfindung zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

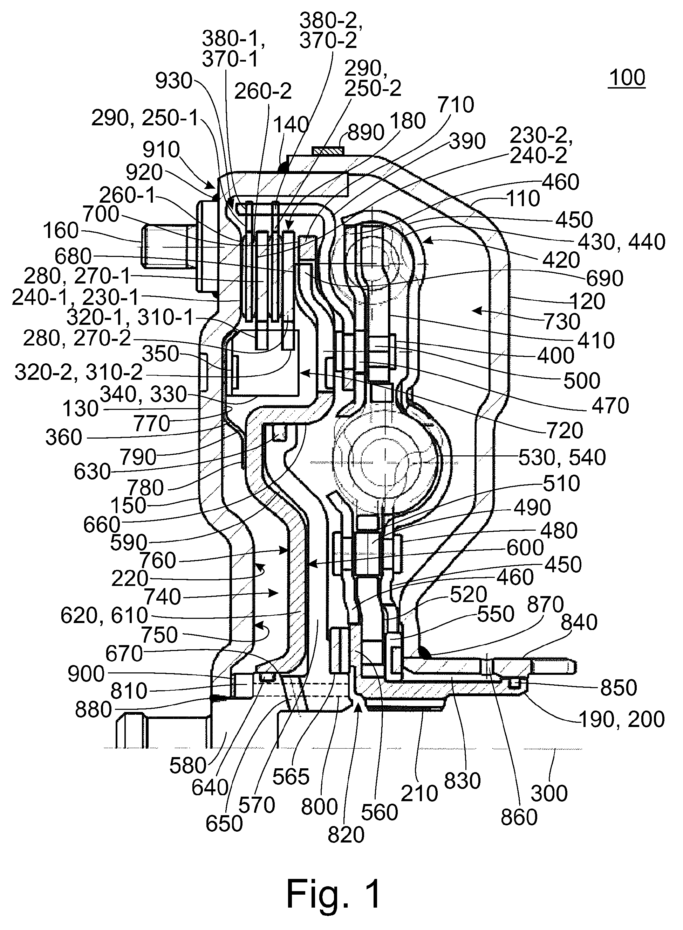

Fig. 1 zeigt eine Querschnittsdarstellung einer Kupplungsanordnung 100 gemäß einem Ausführungsbeispiel. Die Kupplungsanordnung 100 kann hierbei beispielsweise im Rahmen eines Antriebsstrangs eines Fahrzeugs zum Einsatz kommen, um beispielsweise ein von einem Antriebsaggregat bereitgestelltes Drehmoment an ein Getriebe oder ein anderes Bauteil trennbar weiterzugeben. Die Kupplungsanordnung 100 kann daher beispielsweise als Trennkupplung im Falle einer Kombination mit einem synchronisierten Getriebe oder auch als Anfahrkupplung im Zusammenspiel mit einem unsynchronisierten Getriebe, beispielsweise einem entsprechenden Automatikgetriebe, verwendet werden.

Die Kupplungsanordnung 100 umfasst so ein Gehäuse 110, welches im vorliegenden Fall als zweiteiliges Gehäuse mit einer ersten Gehäuseschale 120 und einer zweiten Gehäuseschale 130 ausgeführt ist, wobei die zweite Gehäuseschale 130 auch als motorseitiger Deckel der Kupplungsanordnung 100 bezeichnet wird. Die beiden Gehäuseschalen 120, 130 sind hierbei über eine Schweißverbindung 140 miteinander verbunden. Das Gehäuse 110 ist so mit einem flüssigen Medium befüllbar bzw. befüllt, bei dem es sich beispielsweise um ein Öl oder eine andere Flüssigkeit handelt, die geeignet ist, im Inneren des Gehäuses 110 entstehende Wärme aufzunehmen und abzutransportieren.

Die zweite Gehäuseschale 130 und damit das Gehäuse 110 dienen bei der in Fig. 1 gezeigten Kupplungsanordnung 100 als Antriebsbauteil 150. Zu diesem Zweck weist die zweite Gehäuseschale 130 eine Anschweißschraube 160 zum Befestigen an einer Flexplatte oder einem Schwungrad eines Antriebsaggregats, beispielsweise eines Motors, oder einer anderen Komponente des Antriebsstrangs auf. Alternativ kann anstelle der Anschweißschraube 160 auch ein Zapfen oder eine andere Befestigungsstruktur zum Befestigen der Kupplungsanordnung 100 implementiert werden.

Bei der in Fig. 1 gezeigten Kupplungsanordnung 100 handelt es sich genauer gesagt um eine Mehrscheiben- bzw. Mehrlamellenkupplung. Entsprechend weist die Kupplungsanordnung 100 in einem Innenraum des Gehäuses 110 ein Reibpaket 180 auf, das eine Mehrzahl von ersten Reibflächen 230 und zweiten Reibflächen 240 aufweist, wobei die ersten Reibflächen über nachfolgend beschriebene Komponenten wenigstens im Wesentlichen drehfest mit dem Antriebsbauteil 150 bzw. dem Gehäuse 110 und die zweiten Reibflächen 240 wenigstens im Wesentlichen drehfest mit einem Abtriebsbauteil 190 der Kupplungsanordnung gekoppelt sind. Bei dem Abtriebsbauteil 190 handelt es sich genauer gesagt um eine untere Nabe 200, die über eine Innenverzahnung 210 formschlüssig mit einer in Fig. 1 nicht gezeigten Getriebeeingangswelle koppelbar ist. Die Getriebeeingangswelle weist eine der Innenverzahnung 210 entsprechende Außenverzahnung auf.

Bei dem in Fig. 1 gezeigten Ausführungsbeispiel einer Kupplungsanordnung 100 umfasst das Reibpaket 180 eine an einer Innenfläche 220 des Gehäuses 110 bzw. der zweiten Gehäuseschale 130 gebildete erste Reibfläche 230-1, die mit einer entsprechenden zweiten Reibfläche 240-1 einer Außenlamelle 250-1 in Reibeingriff steht bzw. in einen solchen bringbar ist. Die Außenlamelle 250 ist hierbei mit einem Reibbelag 260-1 beschichtet, an der die zweite Reibfläche 240-1 gebildet ist. Im Unterschied hierzu ist die erste Reibfläche 230-1 direkt an der Innenfläche 220 des Gehäuses 110 gebildet, ist also beispielsweise als Stahloberfläche ausformt, wenn das Gehäuse 110 ebenfalls aus Stahl gefertigt ist.

Die Außenlamelle 250-1 weist an einer der Innenfläche 220 abgewandten Seite einen weiteren Reibbelag 260-2 auf, der an einer Oberfläche eine weitere zweite Reibfläche 240-2 ausbildet. Die zweite Reibfläche 240-2 steht mit einer Innenlamelle 270-1 in Reibeingriff bzw. kann mit dieser über eine entsprechende erste Reibfläche 230-2 in Reibeingriff gebracht werden.

Das Reibpaket 180 weist ferner eine weitere Außenlamelle 250-2 und eine weitere Innenlamelle 270-2 auf, wobei die Außenlamelle 250-2 ebenfalls entsprechende Reibbeläge 260 aufweist, die jedoch der Übersichtlichkeit halber in Fig. 1 ebenso wenig mit Bezugszeichen versehen sind, wie die sich entsprechend ergebenden ersten und zweiten Reibflächen 230, 240. Die Außenlamelle 250-2 ist hierbei zwischen den beiden Innenlamellen 270-1 und 270-2 angeordnet. Das Reibpaket 180 wird an einer der Innenfläche 220 des Gehäuses 110 abgewandten Seite somit durch die Innenlamelle 270-2 begrenzt.

Die Innenlamellen 270 sind hierbei als im Wesentlichen scheibenförmige Stahlbauteile implementiert und stellen entsprechende, wenigstens abschnittsweise scheibenförmige erste Bauteile 280 dar, an denen im Bereich der scheibenförmigen Abschnitte die ersten Reibflächen 230 angeordnet sind. Auch die Außenlamellen 250 sind mit Hilfe ihrer Reibbeläge 260 als wenigstens abschnittsweise scheibenförmige zweite Bauteile 290 implementiert, die an ihren scheibenförmigen Abschnitten die zweiten Reibflächen 240 aufweisen. Selbstverständlich können bei anderen Ausführungsbeispielen auch die Reibbeläge 260 an den jeweils anderen Bauteilen vorgesehen sein.

Sowohl die Innenlamellen 270 wie auch die Außenlamellen 250 weisen bezogen auf eine Drehachse 300 jeweils eine zentrale Ausnehmung auf, wobei sowohl die Innenlamellen 270 wie auch die Außenlamellen 250 gerade um die Drehachse 300 herum drehbar angeordnet sind. Die Drehachse 300 stellt daher auch im mathematischen Sinn die Drehachse der Kupplungsanordnung 100 dar und wird auch als axiale Richtung bezeichnet.

Um eine Drehmomentübertragung von dem als Antriebsbauteil 150 dienenden Gehäuse 110 an die Innenlamellen 270 zu ermöglichen, weisen diese jeweils einen Abschnitt 310-1, 310-2 auf, an denen an einer Seitenfläche jeweils eine Mitnehmerfläche 320-1, 320-2 ausgebildet ist, über die die Innenlamellen 270 jeweils mit einer Förderfläche 330 eines Förderbauteils 340 derart in Eingriff stehen, sodass bei einer Drehung des Förderbauteils 340 auch die jeweiligen Innenlamellen 270 (ersten Bauteile 280) in eine Drehung versetzt werden. Das Förderbauteil 340 ist hierbei im Wesentlichen ringförmig ausgestaltet und erstreckt sich um die Drehachse 300 herum entlang eines Umfangs der Kupplungsanordnung 100. Das Förderbauteil 340 ist bei dem in Fig. 1 gezeigten Ausführungsbeispiel im Wesentlichen mäanderförmig ausgestaltet, sodass die Förderflächen 330 im Wesentlichen senkrecht zu einer Umfangsrichtung der Kupplungsanordnung 100, also im Wesentlichen senkrecht zu einer tangentialen Richtung verlaufen, wobei die tangentiale Richtung senkrecht auf der Drehachse 300 und einer in der entsprechenden Querschnittsebene von der Drehachse 300 weg weisenden radialen Richtung steht.

Das Förderbauteil 340 weist hierbei genauer gesagt eine Mehrzahl der Förderflächen 330 auf. Diese sind entlang des Umfangs des Förderbauteils 340 beispielsweise regelmäßig angeordnet. Entsprechend weisen auch die Abschnitte 310 der Innenlamellen 270 eine entsprechende Anzahl von Mitnehmerflächen 320 auf, mit denen die Mehrzahl der Förderflächen 330 in Eingriff stehen. Das Förderbauteil 340 und die Abschnitte 310 der Innenlamellen 270 bilden so Verzahnungen, die ineinandergreifen. Hierdurch kann eine Verteilung des zu übertragenden Drehmoments auf eine größere Anzahl von Förderflächen 330 und Mitnehmerflächen 320 erzielt werden, sodass es gegebenenfalls möglich sein kann, ein entsprechend höheres Drehmoment auf die Innenlamellen 270 und damit durch die Kupplungsanordnung 100 gemäß einem Ausführungsbeispiel zu übertragen.

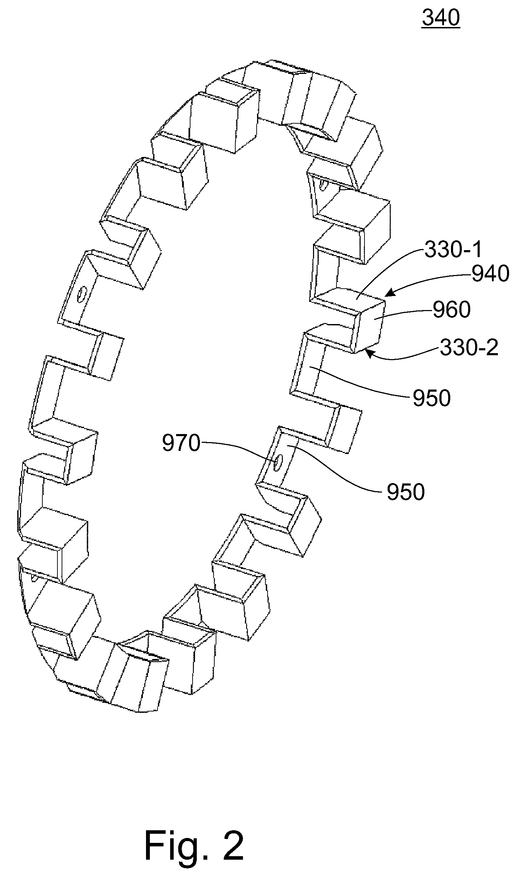

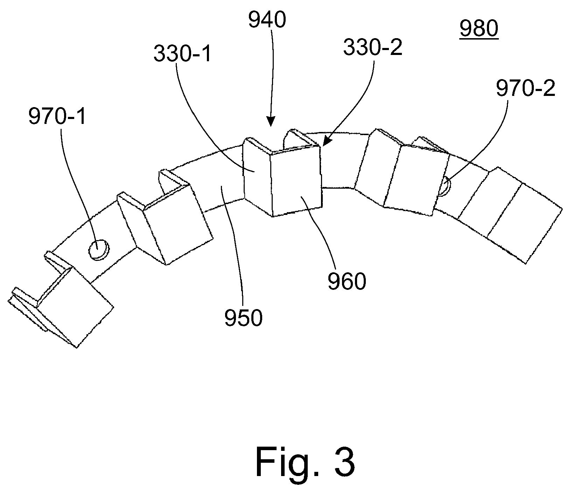

Bevor jedoch im Zusammenhang mit den Fig. 2 und 3 konkrete Implementierungen eines entsprechenden Förderbauteils 340 näher gezeigt und beschrieben werden, wird zunächst die Kupplungsanordnung 100 gemäß einem Ausführungsbeispiel weiter beschrieben.

Das Förderbauteil 340 ist über eine Nietverbindung 350 mit einem Dichtelement 360 und der zweiten Gehäuseschale 130 drehfest und formschlüssig verbunden. Über die Nietverbindung 350 und gegebenenfalls das Dichtelement 360 wird so eine Drehbewegung des Antriebsbauteils 150, also des Gehäuses 110, auf das Förderbauteil 340 und damit auf die Förderflächen 330 übertragen. Durch den Eingriff der Innenlamellen 270 mit dem Förderbauteil 340 über die Förderflächen 330 und die Mitnehmerflächen 320 wird so das Drehmoment auf die Innenlamellen 270 übertragen.

Auch die Außenlamellen 250 (zweite Bauteile 290) weisen Abschnitte 370-1 und 370-2 auf, die über entsprechende weitere Mitnehmerflächen 380 mit einem Träger 390, der auch als Außenlamellenträger bezeichnet wird, in Eingriff stehen und im Falle eines geschaffenen Reibschlusses das von den Innenlamellen 270 auf die Außenlamellen 250 übertragene Drehmoment aufnehmen.

Der Träger 390 weist eine im Wesentlichen topfförmige Struktur mit einer zentralen Ausnehmung auf, der über eine Nietverbindung 400 mit einer ersten Nabenscheibe 410 eines zweistufigen Schwingungsdämpfers 420 gekoppelt ist. Die erste Nabenscheibe 410 ist hierbei über ein Abstands- oder Distanzstück 500 mit dem Träger 390 gekoppelt. Das Distanzstück 500 ist hierbei als Teil der Nietverbindung 400 gebildet, kann jedoch auch von dieser separat ausgeführt sein.

Der Schwingungsdämpfer 420 weist eine Mehrzahl von ersten Federelementen 430 auf, die entlang eines Umfangs der ersten Nabenscheibe 410 angeordnet und jeweils mit einem Ende mit dieser in Anlage stehen. Die ersten Federelemente 430 sind hierbei als Schraubenfedern 440 implementiert. Mit dem jeweils anderen Ende stehen die Schraubenfedern 440 bzw. die ersten Federelemente 430 mit einem ersten Abdeckblech 450 in Anlage, welches aufgrund der in Fig. 1 gezeigten Anordnung auch als rechtes Abdeckblech bezeichnet wird. Das erste Abdeckblech 450 ist hierbei über ein Abstands- bzw. Distanzstück 490 mit einem zweiten Abdeckblech 460 verbunden, welches auch als linkes Abdeckblech bezeichnet wird. Zusammen bilden diese ein nicht abgeschlossenes Gehäuse für das Dämpferelement 430. Das zweite Abdeckblech 460 führt hierbei einstückig nach radial innen.

Die Nietverbindung 400 und das Distanzstück 500, mit der der Träger 390 mit der ersten Nabenscheibe 410 des Schwingungsdämpfers 420 verbunden ist, ist hierbei durch ringsegmentförmiges Langloch 470 geführt, welches eine maximale Bewegungsamplitude der beiden Abdeckbleche 450, 460 zu der ersten Nabenscheibe 410 und damit dem Träger 390 begrenzt.

Das zweite Abdeckblech 460 erstreckt sich in radialer Richtung deutlich weiter als das erste Abdeckblech 450 in Richtung auf die Drehachse 300 zu. So ist das erste Abdeckblech 450 über eine weitere Nietverbindung 480 und das Distanzstück 490 mit dem zweiten Abdeckblech 460 mechanisch drehfest verbunden. Das Distanzstück 490 erstreckt sich hierbei durch ein ebenfalls ringsegmentförmiges Langloch 510 in einer zweiten Nabenscheibe 520. Die zweite Nabenscheibe 520 und das erste Abdeckblech 450 sind hierbei über zweite Federelemente 530 miteinander gekoppelt, die auch hier wiederum als Schraubenfedern 540 implementiert sind. Das zweite Abdeckblech 460 führt so einstückig radial innen über den zweiten Federsatz mit den zweiten Federelementen 530 hinaus.

Selbstverständlich können bei anderen Ausführungsbeispielen einer Kupplungsanordnung 100 auch andere Federelemente als erste bzw. zweite Federelemente 430, 530 zum Einsatz kommen. So können beispielsweise Tonnenfedern, aber auch auf Elastomeren basierende Federelemente verwendet werden, sofern die technischen Randbedingungen, also insbesondere die in dem Gehäuse 110 herrschenden chemischen und/oder thermischen Randbedingungen, einen entsprechenden Einsatz ermöglichen.

Die zweite Nabenscheibe 520 ist weiter über eine drehfeste Verbindung mit der unteren Nabe 200, also dem Abtriebsbauteil 190, verbunden. Auch hierbei kann beispielsweise eine Nietverbindung zum Einsatz kommen. Es kann jedoch auch eine andere, beispielsweise formschlüssige, kraftschlüssige und/oder stoffschlüssige Verbindungstechnik verwendet werden. So können beispielsweise die zweite Nabenscheibe 520 und die untere Nabe 200 miteinander verschweißt werden. Es können jedoch auch beispielsweise Steckverbindungen ergänzend oder alternativ implementiert werden. So können anstelle auch der anderen zuvor beschriebenen Nietverbindungen diese ergänzend oder alternativ als Steckverbindung oder mit Hilfe anderer Verbindungstechniken realisiert werden.

Das Drehmoment wird so von den Außenlamellen 250 über den Träger 390 und die erste Nabenscheibe 410 über die Federelemente 430 auf die Abdeckbleche 450, 460 übertragen, von wo es über die zweiten Federelemente 530 über die zweite Nabenscheibe 520, die untere Nabe 200 zu der in Fig. 1 nicht gezeigten Getriebeeingangswelle weitergeleitet wird, wenn die ersten und zweiten Reibflächen 230, 240 miteinander in Eingriff stehen.

Bei dem in Fig. 1 gezeigten Ausführungsbeispiel ist die zweite Nabenscheibe 520 gegenüber der ersten Gehäuseschale 120 mittels eines Lagers 550, genauer gesagt im vorliegenden Fall mittels eines axialen Gleitlagers, drehbar bezüglich der Drehachse 300 gelagert. An einer dem Lager 550 abgewandten Seite der zweiten Nabenscheibe 520 stützt sich diese gegen einen Abschnitt 560 der unteren Nabe 200 ab, der seinerseits über ein weiteres Lager 565 bezogen auf eine Trennwand 570 drehbar um die Drehachse 300 gelagert ist. Auch bei dem weiteren Lager 565 handelt es sich um ein axiales Gleitlager bei dem in Fig. 1 gezeigten Ausführungsbeispiel. Die Trennwand 570 ist Teil einer vorderen Nabe 580 und begrenzt zu wenigstens einer Seite einen Kolbendruckraum 590. Dieser wird entlang der axialen Richtung, also entlang der Drehrichtung 300 durch eine Kolbenfläche 600 eines Kolbens 610 begrenzt. Der Kolben 610 stellt, wie die weitere Beschreibung noch zeigen wird, ein Anpresselement 620 dar, welches ausgebildet und angeordnet ist, um auf eine Betätigung hin die ersten und zweiten Reibflächen 230, 240 miteinander in den Reibeingriff zu bringen. Bei anderen Ausführungsbeispielen kann das Anpresselement 620 ebenso ausgebildet sein, den Reibeingriff zu trennen. Wie ebenfalls die nachfolgende Beschreibung noch näher illustrieren wird, handelt es sich jedoch bei der in Fig. 1 gezeigten Kupplungsanordnung um eine Normal-Offen-Kupplung, bei der in einem drucklosen Zustand, also ohne eine Betätigung, ein Reibeingriff nicht bzw. nur im geringfügigen Maße vorliegt. Das Anpresselement 620 ist also bei dem hier gezeigten Ausführungsbeispiel ausgebildet, um auf die Betätigung hin die ersten und zweiten Reibflächen 230, 240 miteinander in den Reibeingriff zu bringen.

Der Kolbendruckraum 590 ist mit Hilfe zweier Dichtelemente 630 und 640 gegenüber dem Anpresselement 620 einerseits und der vorderen Nabe 580 andererseits abgedichtet. Um in dem Kolbendruckraum ein entsprechendes, unter Druck stehendes Medium, bei dem es sich beispielsweise um das gleiche flüssige Medium handeln kann, mit dem auch der Rest des Gehäuses 110 befüllbar ist, weist die vordere Nabe 580 eine Zulaufbohrung 650 zu dem Kolbendruckraum 590 auf, die den Kolbendruckraum 590 fluidtechnisch mit einem der zweiten Gehäuseschale 130 zugewandten Bereich der zentralen Ausnehmung verbindet, in dem auch die Getriebeeingangswelle angeordnet ist.

Um eine Bewegung des Anpresselements 620 entlang der Drehrichtung 300 zu ermöglichen, sind die beiden Dichtelemente 630, 640 jeweils in einer entsprechenden Nut in der Trennwand 570 und der vorderen Nabe 580 angeordnet und derart ausgerichtet, dass diese mit einer entsprechenden, sich entlang der Drehrichtung 300 erstreckenden Dichtfläche 660 und 670 des Anpresselements 620 in Kontakt stehen.

Das Anpresselement 620 erstreckt sich entlang der radialen Richtung, also ausgehend von der Drehachse 300 senkrecht zu dieser bis in Höhe der Innen- und Außenlamellen 270, 250. Das Anpresselement 620 weist in diesem Bereich eine erste Anpressfläche 680 auf, die den ersten und zweiten Reibflächen 230, 240, also den Außenlamellen 250 und Innenlamellen 270, zugewandt ist. Die erste Anpressfläche 680 ist bei dem in Fig. 1 gezeigten Ausführungsbeispiel durch eine Einscherung des Anpresselements 620 gebildet, durch die sich eine Nase 690 bildet, die gegenüber dem Anpresselement 620 in diesem Bereich auf die ersten und zweiten Reibflächen 230, 240 hin ausgestellt ist. Die Nase 690 ist also über ein Materialstück, aus dem das Anpresselement 620 gefertigt ist, also beispielsweise aus einem Stahl oder einem anderen metallischen Werkstoff, mit diesem verbunden und weist daher eine gegenüber dem Anpresselement 620 geringere Federkonstante auf. Die in Fig. 1 gezeigte Kupplungsanordnung 100 weist hierbei eine Mehrzahl von Nasen 690 auf, die entlang des Umfangs der Kupplungsanordnung verteilt angeordnet sind. Die Anordnung kann hierbei sowohl regelmäßig, wie auch unregelmäßig erfolgen.

Die Nase 690 steht hierbei über die erste Anpressfläche 680 mit einer Rückseite der Innenlamelle 270-2 in Kontakt. Das Anpresselement 620 ist also mit Hilfe der Nase 690 ausgebildet, um über die erste Anpressfläche 680 des Anpresselements 620 eine Anpresskraft in Richtung der ersten und zweiten Reibflächen 230, 240 zu schaffen, durch die der Reibeingriff zwischen diesen geschaffen werden kann. Aufgrund der gegenüber dem Rest des Anpresselements 620 reduzierten Federkonstante kann gegebenenfalls durch das Vorsehen der ersten Anpressfläche 680 an der Nase 690 ein sanfteres Einkuppeln ermöglicht werden.

Das Anpresselement 620 weist darüber hinaus jedoch ferner eine zweite Anpressfläche 700 auf, die nicht an der Nase 690, sondern vielmehr an einem Abschnitt 710 des Anpresselements 620 gebildet ist. Hinsichtlich seiner Federeigenschaften, also beispielsweise seiner Federkonstanten, unterscheidet sich der Abschnitt 710 deutlich weniger von den weiteren Bereichen des Anpresselements 620, als dies beispielsweise im Fall der Nase 690 der Fall ist. So ist die Federkonstante des Abschnitts 710 typischerweise deutlich größer als die der Nase 690, also beispielsweise wenigstens ein 2-Faches, wenigstens ein 5-Faches oder wenigstens ein 10-Faches.

Wird nun das Anpresselement 620 entlang der Drehachse 300 auf die ersten und zweiten Reibflächen 230, 240 zu bewegt, bewegt sich also in Fig. 1 nach links, erfolgt zunächst ein vergleichsweise sanftes Einkuppeln über die erste Anpressfläche 680 der Nasen 690. Wird das Anpresselement 620 weiter bewegt, erhöht sich die Deformation der Nase 690 und die Anpresskraft, die über die erste Anpressfläche 680 auf die Lamellen 250, 270 und damit auf die entsprechenden Reibflächen 230, 240 ausgeübt wird, wird größer. Wird das Anpresselement 620 nun so weit bewegt, dass dieses über die zweite Anpressfläche 700 des Abschnitts 710 die Anpresskraft bewirkt, wird gegebenenfalls eine deutlich höhere, nahezu sprunghaft ansteigende Anpresskraft auf die Reibflächen 230, 240 übertragen. Abgesehen von elastischen Deformationen des Anpresselements 620 und gegebenenfalls der Reibbeläge 260 befindet sich das Anpresselement 620 nunmehr an einem Endzustand, in dem die Kupplungsanordnung 100 vollständig eingekuppelt ist. Selbstverständlich ist es auch in diesem Bereich allerdings noch möglich, durch ein entsprechendes Erhöhen einer das Anpresselement 620 in Richtung der ersten und zweiten Reibflächen 230, 240 treibenden Kraft weiter zu erhöhen, allerdings ohne dass das Anpresselement 620 sich signifikant bewegt.

Bei dem zuvor beschriebenen Übergang von der ersten Anpressfläche 680 auf die zweite Anpressfläche 700 steht zwar auch die erste Anpressfläche 680 im Allgemeinen weiterhin in Kontakt mit der Innenlamelle 270-2, überträgt jedoch im Vergleich zu der zweiten Anpressfläche 700 deutlich geringere Kräfte, die sich aus dem Verhältnis der entsprechenden Federkonstanten der Nase 690 und der des Abschnitts 710 ergeben. Das Anpresselement 620 liegt in diesem Zustand im Wesentlichen entlang seines ganzen Umfangs an der Innenlamelle 270-2 an.

Um bei einem Einkuppeln der Kupplungsanordnung 100 eine Verschiebung eines effektiven Anpresspunktes zu unterbinden, können bei der in Fig. 1 gezeigten Ausgestaltung des Anpresselements 620 Flächenmittelpunkte bzw. effektive Berührpunkte der betreffenden beiden Anpressflächen 680, 700 unter Berücksichtigung des entsprechenden Gegenbauteils, also im vorliegenden Fall unter Berücksichtigung der Innenlamelle 270-2, im Wesentlichen zusammenfallen. Darüber hinaus kann bei der in Fig. 1 gezeigten Implementierung des Anpresselements 620 eine Anpressfläche erhöht werden. Hierdurch kann es gegebenenfalls möglich sein, eine höhere Anpresskraft aufgrund der höheren Fläche zu übertragen, ohne im Wesentlichen eine Veränderung des effektiven Anpresspunktes befürchten zu müssen.

Eine Verlagerung des effektiven Anpresspunktes könnte gegebenenfalls zu einer Veränderung der an den ersten und zweiten Reibflächen 230, 240 vorherrschenden Druckverhältnisse führen, die beispielsweise durch eine Elastizität der Reibbeläge 260 aber auch der betreffenden Innen- und Außenlamellen 270, 250 sowie anderer Bauteile hervorgerufen werden können. Hierdurch kann gegebenenfalls ein Punkt an den Reibflächen 230, 240 verschoben werden, an dem eine maximale Wärme aufgrund der entstehenden Reibung bei dem Einkuppeln übertragen werden kann. So kann es unter gewissen Umständen gegebenenfalls dazu kommen, dass eine Kühlung der ersten und zweiten Reibflächen 230, 240 durch das zuvor erwähnte flüssige Medium im Inneren des Gehäuses 110 weniger effizient möglich ist. Auch kann es zu einer ungleichmäßigen Abnutzung der Reibbeläge 260 kommen. Aufgrund der axialen Beweglichkeit der Innenlamellen 270 und der Außenlamellen 250 kann es ferner unter Umständen auch zu einer leichten Verkantung der Lamellen 250, 270 im Bereich ihrer jeweiligen Verzahnungen bzw. Eingriffe mit dem Förderbauteil 340 und dem Träger 390 kommen, wodurch der entsprechende Effekt gegebenenfalls weiter verstärkt werden kann.

Das Anpresselement 620 sowie die Außenlamellen 250, die Innenlamellen 270 und das Dichtelement 360 begrenzen hierbei wenigstens teilweise ein erstes Volumen 720 eines Innenvolumens der Kupplungsanordnung 100. Wie bereits zuvor im Zusammenhang mit dem Förderbauteil 340 kurz erläutert wurde, weist das Förderbauteil 340 die Mehrzahl von Förderflächen 330 auf, die nicht nur mit den Mitnehmerflächen 320 der Innenlamellen 270 in Eingriff steht, die Förderflächen 330 sind vielmehr ebenso ausgebildet, um bei einer Bewegung der Förderflächen gegenüber dem flüssigen Medium in dem Inneren des Gehäuses 110 einen Strom des flüssigen Mediums zu bewirken. Zu diesem Zweck ist das Förderbauteil 340 mit dem als Antriebsbauteil 150 dienenden Gehäuse 120 drehfest verbunden. Die Förderflächen 330 sind bei dem in Fig. 1 gezeigten Ausführungsbeispiel nicht zuletzt in dem ersten Volumen 720 angeordnet, sodass bei einer Bewegung der Förderflächen 330 zu dem flüssigen Medium das in diesem ersten Volumen 720 befindliche flüssige Medium gefördert wird.

Um eine möglichst effiziente Förderung des flüssigen Mediums zu ermöglichen, kann es in diesem Zusammenhang ratsam sein, dass die Innenlamellen 270 derart über die Mitnehmerflächen 320 mit den Förderflächen 330 des Förderbauteils 340 in Eingriff stehen zu lassen, dass eine Berührfläche zwischen den betreffenden Mitnehmerflächen 320 und der Förderfläche 330 höchstens 50 % einer Fläche der Förderfläche ist. Sofern eine ausreichende Stabilität und Kraftübertragung bzw. Drehmomentübertragung über die Förderflächen 330 auf die Mitnehmerflächen 320 der Innenlamellen 280 gewährleistet ist, kann eine weitere Reduzierung gegenüber dem vorgenannten Verhältnis gegebenenfalls zu einer Verbesserung der Strömung führen. So kann es bei anderen Ausführungsbeispielen beispielsweise ratsam sein, das vorgenannte Verhältnis auf höchstens 30 %, höchstens 25 %, höchstens 20 %, höchstens 15 % oder höchstens 10 % zu beschränken. Eine untere Grenze für dieses Verhältnis ist in der Doppelfunktion aus Förderfläche einerseits und Eingriffsfläche andererseits zu suchen.

Die Förderflächen 330, wie sie in Fig. 1 gezeigt sind, sind hierbei zusammenhängend und eben. Sie sind entlang der Umfangs- oder Tangentialrichtung, also im Wesentlichen senkrecht zu der Drehachse 300 und von dieser wegweisenden radialen Richtung ausgerichtet. Im Hinblick auf die drehmomentübertragenden Eigenschaften der Förderflächen 330 kann diese Ausgestaltung vorteilhaft sein, da hierdurch axiale Kräfte entlang der Drehachse 300 über die Mitnehmerflächen 320 auf die Innenlamellen 270 (erste Bauteile 280) reduziert, wenn nicht sogar vermieden werden können. Aber auch im Hinblick auf die Bewirkung des Stroms des fluiden Mediums, also beispielsweise eines Öls, kann diese Ausgestaltung der Förderflächen 330 von Vorteil sein. So kann hierdurch gegebenenfalls ein im Wesentlichen radial nach außen gerichteter Strom des flüssigen Mediums auf die ersten und zweiten Reibflächen 230, 240 hin bewirkt werden.

Die betreffenden Lamellen 270, 250 bzw. ihre gegebenenfalls implementierten Reibbeläge 260 können derart ausgebildet sein, dass diese von dem Strom des flüssigen Mediums durchströmbar sind. Zu diesem Zweck können die entsprechenden Lamellen 250, 270 bzw. die mit diesen verbundenen oder umfassten Komponenten Kanäle oder Fluidkanäle aufweisen, die einen Durchtritt des flüssigen Mediums entlang der radialen Richtung ermöglichen. Diese können beispielsweise in geraden Linien, jedoch auch in gebogenen Linien ausgeführt sein und im Bereich der Reibflächen 230, 240 verlaufen. Hierdurch kann eine gerade im Bereich der Reibflächen 230, 240 frei werdende Reibungsenergie bzw. Wärme räumlich nah an das flüssige Medium abgegeben und aufgrund des herrschenden Stroms abtransportiert werden.

Die Förderfläche 330 weist in der in Fig. 1 gezeigten Querschnittsebene eine Querschnittsfläche auf, die ihrerseits einen nicht unerheblichen Anteil an einer Querschnittsfläche des zweiten Volumens 720 in der betreffenden Querschnittsebene umfasst. Um eine möglichst hohe, den Umständen jedoch entsprechende Förderwirkung des Förderbauteils 340 zu ermöglichen, kann es ratsam sein, bei Ausführungsbeispielen einer Kupplungsanordnung 100 die Querschnittsfläche des ersten Volumens 720 im Vergleich zu der Querschnittsfläche der Förderfläche 330 derart zu wählen, dass diese höchstens ein 20-Faches, höchstens ein 15-Faches, höchstens ein 10-Faches oder höchstens ein 7,5-Faches der Querschnittsfläche der Förderfläche 330 entspricht. Es kann sogar möglich sein, bei Ausführungsbeispielen einer Kupplungsanordnung noch geringere Faktoren zu verwenden. So kann es durchaus möglich sein, auch höchstens ein 5-Faches, höchstens ein 3-Faches oder höchstens ein 2-Faches der Förderfläche 330 als Querschnittsfläche des ersten Volumens 720 vorzusehen. Selbstverständlich können bei anderen Ausführungsbeispielen jedoch auch größere Vielfache als die oben genannten auftreten.

Um einen entsprechenden Zufluss des flüssigen Mediums zu der Förderfläche 330 zu ermöglichen, weist das Anpresselement 620 in radialer Richtung auf Höhe der Förderflächen 330 oder näher zu der Drehachse 300 hin eine in Fig. 1 nicht gezeigte Durchlassöffnung 305 auf, die auch als Öffnungsbohrung oder Durchtrittsöffnung bezeichnet wird. Die Durchtrittsöffnung ist hierbei radial außerhalb des Dichtelements 360 angeordnet, mündet also in das erste Volumen 720 ein. Hierdurch kann flüssiges Medium durch die in Fig. 1 nicht gezeigte Durchtrittsöffnung in das erste Volumen 720 eintreten, wo dieses durch die sich relativ zu dem flüssigen Medium gegebenenfalls drehenden Förderflächen 330 radial nach außen durch die Reibflächen 230, 240 transportiert wird. Dort tritt der Strom des flüssigen Mediums in ein Teilvolumen 730 des Gehäuses 110 ein, in dem auch der Schwingungsdämpfer 420 angeordnet ist. In dem Teilvolumen 730 kann dann die an das flüssige Medium abgegebene Wärme an andere Bauteile, beispielsweise das Gehäuse 110, abgegeben werden. Ein Teil des flüssigen Mediums kann dann durch die in Fig. 1 nicht gezeigte Durchlassöffnung 305 wieder in das erste Volumen 720 eintreten, während ein weiterer Teil des flüssigen Mediums das Teilvolumen 730 durch das Lager 550 verlassen kann. Die Trennwand 570 trennt hierbei das Teilvolumen 730 von dem Kolbendruckraum 590.

Die Förderwirkung des Förderbauteils 340 basiert also nicht zuletzt darauf, dass bei einem Drehzahlunterschied zwischen dem Förderbauteil 340 und dem flüssigen Medium diesem ein Strom aufgezwungen wird. Das Förderbauteil kann sich so über die beschriebenen drehfesten Verbindungen eine Relativbewegung zwischen dem Antriebsbauteil 150 und dem Abtriebsbauteil 190 zunutze machen. Eine solche Relativbewegung liegt insbesondere im Bereich des Schlupfs vor, wenn also die ersten und zweiten Reibflächen 230, 240 miteinander in Kontakt stehen, jedoch unterschiedliche Drehgeschwindigkeiten aufweisen. Gerade in dieser Situation wird eine nicht unerhebliche Wärmemenge im Bereich der Reibflächen 230, 240 erzeugt, die über das flüssige Medium abtransportiert werden sollte. Liegt ein Drehzahlausgleich schließlich vor, ist also die Kupplungsanordnung 100 eingekuppelt, wird im Wesentlichen keine neue Wärme erzeugt, sodass auch ein Nachlassen der Förderwirkung aufgrund ähnlicher Geschwindigkeiten des Förderbauteils 340 einerseits und des flüssigen Mediums andererseits unproblematisch ist, wenn sich diese im Wesentlichen mit dem Gehäuse 110 mit dreht.

Das Dichtelement 360 trennt ein zweites Volumen 740 von dem ersten Volumen 720 ab. Das zweite Volumen 740 wird hierbei ferner durch einen Oberflächenabschnitt 750 der Innenfläche 220 der zweiten Gehäuseschale 130 und einer Kolbenrückseite 760 wenigstens teilweise begrenzt, wobei die Kolbenrückseite 760 an einer der Kolbenfläche 600 abgewandten Seite des Anpresselements 620 liegt.

Kommt es aufgrund einer Relativbewegung des Förderbauteils 340 mit seinen Förderflächen 330 zu dem flüssigen Medium zu einer Pumpwirkung, sinkt aufgrund hydrodynamischer Effekte ein (statischer) Druck in dem ersten Volumen 720. Dadurch, dass das Dichtelement 360 jedoch das erste Volumen 720 von dem zweiten Volumen 740 trennt, kann so in dem zweiten Volumen 740 unabhängig von einer gegebenenfalls eintretenden Förderwirkung des Förderbauteils 340 der dort herrschende Druck im Wesentlichen konstant gehalten werden, zumindest jedoch ein gegebenenfalls aufgrund anderer Effekte auftretenden Druckabfall begrenzt werden. Hierdurch wird auch bei einer Relativbewegung bzw. Pumpwirkung durch das Förderbauteil 340 eine Kraft, die auf die Kolbenrückseite 760 einwirkt, im Wesentlichen nicht durch die Förderwirkung und damit durch die Bewegung des Förderbauteils 340 beeinflusst.

Anders ausgedrückt kann durch den Einsatz des Dichtelements 360 ein in dem zweiten Volumen 740 herrschender Druck konstanter gehalten werden, sodass bei einer Ansteuerung des Anpresselements 620 durch Einleiten oder Abziehen eines Flüssigkeitsvolumens in den oder aus dem Kolbendruckraum 590 auftretende Druckänderungen in dem zweiten Volumen und damit Kraftänderungen auf die Kolbenrückseite 760 im Wesentlichen unterbunden, zumindest jedoch reduziert werden können. Dadurch, dass die entsprechende Kraft auf die Kolbenrückseite 760 konstanter gehalten wird, kann ein Einkuppelverhalten, ein Auskuppelverhalten oder eine Definition eines bestimmten Schlupfverhältnisses an den Reibflächen 230, 240 durch Ansteuern des Anpresselements 620 gegebenenfalls verbessert werden. Es kann also gegebenenfalls möglich sein, eine Kontrollierbarkeit bzw. Steuerbarkeit der Kupplungsanordnung 100 gemäß einem Ausführungsbeispiel durch den Einsatz des entsprechenden Dichtelements 360 zu verbessern.

Je nach konkreter Ausgestaltung des Dichtelements 360 kann es möglich sein, das zweite Volumen 740 kleiner oder auch größer auszugestalten, indem eine radiale Position des Dichtelements 360 verändert wird. Hierbei kann jedoch weniger die tatsächliche Größe des ersten Volumens 720 im Vordergrund stehen, als vielmehr eine Lage und/oder eine Größe eines Flächenabschnitts des Anpresselements 620, der das zweite Volumen 740 wenigstens teilweise begrenzt. So treten bei einer Drehung der Kupplungsanordnung 100 Zentrifugalkräfte auf das in dem zweiten Volumen 740 und dem Kolbendruckraum 590 befindliche flüssige Medium auf. Diese führen zu einer Ausbildung eines Drucks, der von beiden Seiten her auf das Anpresselement 620 einwirkt und Kräfte bewirkt, die einander entgegengerichtet sind. Die radiale Position des Dichtungselements 360 bzw. seines Übergangsbereichs 790 hat daher darauf einen Einfluss, ob es aufgrund der Fliehkraftwirkung zu einer zusätzlichen effektiven Kraft auf das Anpresselement 620 durch die Druckveränderungen kommt, wie groß diese ist und in welche Richtung sie wirkt.

Wird beispielsweise der Übergangsbereich 790 des Dichtelements 360 näher auf die Drehachse 300 hin versetzt, sodass eine Erstreckung des Flächenabschnitts des Anpresselements 620 entlang der radialen Richtung verkleinert wird und das zweite Volumen 740 kleiner wird, werden auch die von Seiten des zweiten Volumens 740 auf das Anpresselement 620 einwirkenden Kräfte kleiner. Ein im Kolbendruckraum 590 aufgrund der Zentrifugalkraft wirkender Druck führt so zu einer gegenüber der unveränderten Position des Dichtelements 360 größeren effektiven Kraft auf das Anpresselement 620. Die auftretenden Zentrifugalkräfte im Kolbendruckraum 590 werden daher unterkompensiert.

Entsprechend kann durch eine Variation des Ortes, an dem der Übergangsabschnitt 790 angeordnet ist, jedoch auch eine Überkompensation oder eine im Wesentlichen vollständige Kompensation des wirkenden Fliehkraftdrucks auf das Anpresselement 620 ermöglicht werden. Hierbei kann es gegebenenfalls ratsam sein, den unter den betreffenden Umständen aufgrund der Zentrifugalkräfte in dem zweiten Volumen 740 auftretenden Druck derart zu bemessen, dass dieser weder zu groß, noch zu klein ist, um eine Einrück- oder Ausrückbewegung des Anpresselements 620 zu hemmen oder gar zu verhindern.

Wie bereits zuvor erwähnt wurde, ist das Dichtelement 360 ferner ausgebildet, um nicht nur das erste Volumen 720 von dem zweiten Volumen 740 fluidtechnisch zu trennen, es ist ferner ausgebildet, um auf das Anpresselement 620 oder ein anderes Bauteil mit einem wenigstens teilweise scheibenförmigen Abschnitt eine Kraft derart auszuüben, die bestrebt ist, das Anpresselement 620 in seine Ausgangsposition zurückkehren zu lassen, wenn dieses nicht betätigt wird. Das Dichtelement kann entsprechend auch eine solche Kraft ausüben, dass das Anpresselement 620 in seine Ausgangsposition zurückkehrt. In der in Fig. 1 auch gezeigten Ausgangsposition ist gerade der Reibeingriff zwischen den ersten und zweiten Reibflächen 230, 240 gelöst, zumindest jedoch so weit geschwächt, dass kein signifikantes Drehmoment über die Kupplungsanordnung 100 übertragen wird. Die Betätigung des Anpresselements 620 erfolgt hierbei durch Einleiten eines entsprechenden Fluidvolumens durch die Zulaufbohrung 650 zu dem Kolbendruckraum 590.

Um diese Doppelfunktionalität des Dichtelements 360 zu ermöglichen, weist das Dichtelement 360 eine erste Dichtfläche 770 und eine zweite Dichtfläche 780 auf, die durch einen Übergangsabschnitt 790 miteinander verbunden sind. Die erste Dichtfläche 770 und die zweite Dichtfläche 780 sind hierbei beide im Wesentlichen senkrecht zu der Drehachse 300 ausgerichtet und entlang dieser beabstandet. Die beiden Dichtflächen 770, 780 sind hierbei auch entlang der radialen Richtung, also senkrecht zu der Drehachse 300 voneinander beabstandet, wobei bei dem in Fig. 1 gezeigten Dichtelement 360 die zweite Dichtfläche 780 radial innen liegend zu der ersten Dichtfläche 770 angeordnet ist. Hierdurch weist der Übergangsabschnitt 790 eine Kegelmanteloberflächenform auf. Selbstverständlich können bei anderen Ausführungsbeispielen die beiden Dichtflächen 770, 780 entlang der radialen Richtung auch vertauscht angeordnet sein.

Die beiden Dichtflächen 770, 780 liegen hierbei auf entsprechenden Ebenen bzw. ringförmigen Abschnitten des Gehäuses 110 bzw. der zweiten Gehäuseschale 130 und dem Anpresselement 620 an. Diese können je nach konkreter Ausgestaltung gegebenenfalls oberflächenbehandelt, also beispielsweise abgedreht, sein, um entsprechende Gegendichtflächen zu bilden.

Kommt es nun aufgrund einer Bewegung des Anpresselements 620 zu einer Deformation des Dichtelements 360, wird nicht zuletzt der Übergangsabschnitt 790 deformiert, wobei aufgrund der flächigen Ausgestaltung der beiden Dichtflächen 770, 780 auch im Falle einer Deformation derselben oder einer Änderung ihrer geometrischen Ausrichtung zu dem Anpresselement 620 und der zweiten Gehäuseschale 130 tendenziell zunächst eine flächenförmige Auflage vorherrscht. Je nach Grad der Verformung des Dichtelements 620 kann es jedoch auch zu einem Abheben oder Abrollen wenigstens eines Teils einer der beiden Dichtflächen 770, 780 kommen. Es kann in einem solchen Fall zumindest abschnittsweise, gegebenenfalls jedoch auch vollständig dazu kommen, dass die betreffenden Dichtflächen 770, 780 das entsprechende Bauteil, also das Anpresselement 620 bzw. die zweite Gehäuseschale, nur linienförmig berühren. Es liegt jedoch typischerweise stets wenigstens ein linienförmiger Berührbereich vor. Hierdurch kann auch im Falle einer Bewegung des Anpresselements 620 eine Dichtwirkung des Dichtelements 360 wenigstens teilweise aufrechterhalten werden. Zur besseren Fixierung des Dichtelements 360 an der zweiten Gehäuseschale 130 weist dieses darüber hinaus an einer dem Übergangsabschnitt 790 abgewandten Seite einen Abschnitt auf, der einer Form der zweiten Gehäuseschale 130 angepasst ist, um so in radialer Richtung und in axialer Richtung, also entlang der Drehachse 300, wenigstens teilweise eine formschlüssige Verbindung zu bilden. Diese formschlüssige Verbindung kann gegebenenfalls auch nur als Montagehilfe bzw. Zentrierhilfe für das Dichtelement 360 ausgelegt sein. Ergänzend oder alternativ kann der Abschnitt, der auch als Kragen oder Rand bezeichnet wird, auch zur mechanischen Stabilisierung des Dichtelements 360 vorgesehen werden. So kann durch diesen gegebenenfalls eine Verformung des Dichtelements 360 in Umfangsrichtung bei einem Verfahren des Anpresselements 620 entlang der Drehachse 300 gegebenenfalls reduziert oder vollständig unterbunden werden. So können beispielsweise Wellenbildungen entlang der Umfangsrichtung bei entsprechenden Belastungen auftreten. Auch kann gegebenenfalls die zuvor beschriebene Anpassung der Formen des Dichtelements 360 und der zweiten Gehäuseschale 130 entfallen.

Das Dichtelement 360 dient somit bei dem in Fig. 1 gezeigten Ausführungsbeispiel einer Kupplungsanordnung 100 nicht nur zur fluidtechnischen Trennung des ersten und des zweiten Volumens 720, 740, sondern erfüllt die zusätzliche Funktion der Rückführung des Anpresselements 620 in eine Ausgangslage vor einer Betätigung desselben, sodass es sich bei der Kupplungsanordnung 100 gerade um eine Normal-Offen-Kupplungsanordnung handelt. Gegebenenfalls kann das Dichtelement 620 auch durch ein weiteres entsprechendes Federelement, beispielsweise in Form einer ergänzenden Teller-, Membran-, Blatt- oder Spiralfeder unterstützt werden.

Bei anderen Ausführungsbeispielen kann das Dichtelement 360 selbstverständlich auch eine derartige Kraft auf das Anpresselement 620 oder ein anderes Bauteil ausüben, sodass die Kupplungsanordnung 100 eine Normal-Geschlossen-Kupplungsanordnung darstellt, bei der ohne eine Betätigung ein Reibeingriff zwischen den ersten und zweiten Reibflächen 230, 240 besteht. Anders ausgedrückt kann das Dichtelement 360, das auch als Dichtblech bezeichnet wird, nicht nur wie in Fig. 1 gezeigt auf Druck vorgespannt, sondern auch auf Zug vorgespannt sein. Hierdurch kann beispielsweise eine Normal-Geschlossen-Kupplungsanordnung realisiert werden.

Bei der in Fig. 1 gezeigten Kupplungsanordnung 100 handelt es sich um einen Drei-Leitungs-Typ, bei dem die Zulaufbohrung 650 eine der drei Leitungen bzw. Kanäle darstellt, mit deren Hilfe der Kolbendruckraum 590 mit dem flüssigen Medium, gegebenenfalls auch mit einem anderen flüssigen Medium, beschickt werden kann. Um eine Bewegung des Anpresselements 620 zu ermöglichen, ist das zweite Volumen 740 über einen in Fig. 1 gestrichelt eingezeichneten Zuleitungskanal 800, der in eine Zuführung 810 zu dem zweiten Volumen 740 führt, fluidtechnisch verbunden. Der Zuleitungskanal 800 mündet hierbei in einen Zuflussbereich 820, der entlang der in Fig. 1 nicht gezeigten Getriebeeingangswelle geführt ist. Der Zuleitungskanal 800 und die Zuführung 810 ermöglichen so einen Zu- und Abfluss des flüssigen Mediums im Falle eines Bewegens des Anpresselements 620. Sie dienen somit dem Ausgleich des entsprechenden Volumens.

Der Zuflussbereich 820 ist hierbei über einige in der Innenverzahnung 210 bzw. der entsprechenden Außenverzahnung der Getriebeeingangswelle fehlender Zähne mit einem Zufluss für das flüssige Medium, also für das Öl bzw. Getriebeöl, verbunden. Häufig werden im Bereich der Innenverzahnung 210 und der korrespondierenden Außenverzahnung der in Fig. 1 nicht gezeigten Getriebeeingangswelle ein Zahn oder zwei oder mehr benachbarte Zähne an mehreren Stellen entlang des Umfangs der entsprechenden Verzahnungen eingespart, sodass Öldurchtrittsleitungen an diesen Stellen gebildet werden, die den Zuflussbereich mit dem Getriebe fluidtechnisch koppeln. Genauer gesagt fehlen bei dem in Fig. 1 gezeigten Ausführungsbeispiel an drei Stellen jeweils zwei benachbarte Zähne in den betreffenden Verzahnungen, um die Öldurchtrittsleitungen zu bilden.

Über den Zuflussbereich 820 wird nicht nur das zweite Volumen 740 mit dem flüssigen Medium versorgt, auch das Teilvolumen 730 ist über den Zuflussbereich 820 und in dem Lager 565 integrierten Ölführungsleitungen fluidtechnisch verbunden. Anders ausgedrückt führt der Ölzulauf durch die Innenverzahnung 210 und die entsprechende Außenverzahnung der Getriebeeingangswelle, den Zuflussbereich 820 und die Ölführungskanäle des Lagers 565. Die Zulaufbohrung 650 zu dem Kolbendruckraum 590 ist hierbei von dem Zuflussbereich 820 durch eine in Fig. 1 ebenfalls nicht gezeigte Dichtung getrennt. Der Zuflussbereich 820 stellt so die zweite Leitung dar.

Das flüssige Medium kann das Teilvolumen 730 über entsprechende Ölführungen bzw. Ölführungskanäle in dem Lager 550 und einem Abflussbereich 830 verlassen. Der Abflussbereich 830 ist hierbei zwischen der unteren Nabe 200 und einer Pumpennabe 840 gebildet und weist einen im Wesentlichen ringförmigen Querschnitt auf. Die Pumpennabe 840 ist hierbei gegenüber der unteren Nabe 200 mit Hilfe eines Dichtelements 850 abgedichtet. Das in dem Abflussbereich 830 eingetretene flüssige Medium kann dann über eine Öffnung 860, die auch als Ölablauf bezeichnet wird, abgezogen werden. Bei der in Fig. 1 gezeigten Kupplungsanordnung 100 ist die Öffnung 860 hierbei mit dem Sumpf des Getriebes oder aber auch einem anderen Behälter für das Öl bzw. das flüssige Medium verbunden. Die Öffnung 860 stellt somit zusammen mit dem Abflussbereich 830 die dritte Leitung dar.

Das Fördervolumen, welches durch das Förderbauteil 340 mit seinen Förderflächen 330 im Inneren des Gehäuses 110 umwälzbar ist, übersteigt in vielen Fällen ein Volumen, welches dem Gehäuse 110 über den Zuflussbereich 820 und den Abflussbereich 830 zugeführt bzw. über diesen abgeführt wird, um ein Vielfaches. So wird mit Hilfe der Förderflächen 330 des Förderbauteils 340, aber auch durch andere, eine Förderung des flüssigen Mediums unterstützende Strukturen im Inneren des Gehäuses 110 häufig ein Volumenstrom erzeugt. Dieser kann wenigstens ein 5-Faches, wenigstens ein 10-Faches, wenigstens ein 15-Faches oder wenigstens ein 20-Faches des durch den Zuflussbereich 820 der Kupplungsanordnung 100 zur Verfügung gestellten Volumens des flüssigen Mediums betragen, jedoch auch kleiner als die vorgenannten Werte sein. Die hierbei angegebenen Verhältnisse beziehen sich auf eine maximale Fördermenge durch das Förderbauteil 340. Die Förderflächen 330, die gerade eine Zwangsströmung in dem jeweiligen, mit Fluid befüllten und um die Drehachse rotierenden Gehäuse 110 erzeugen, nutzen gerade den Effekt unterschiedlicher Drehzahlen an der Antriebs- und Abtriebsseite der Kupplungsanordnung 100 aus, also die unterschiedlichen Drehzahlen an dem Antriebsbauteil 150 und dem Abtriebsbauteil 190. Die Förderflächen 330 wirken bezüglich der Umwälzung des flüssigen Mediums wie ein Pumpenrad bzw. wie ein Turbinenrad bei einer Hydrokupplung oder einem hydrodynamischen Drehmomentwandler.

Die Pumpennabe 840 ist mit der ersten Gehäuseschale 120 des Gehäuses 110 über eine Verschweißung 870 verbunden. Auch die zweite Gehäuseschale 130 ist mit der vorderen Nabe 580 über eine Verschweißung 880 verbunden, sodass sich im Zusammenhang mit der Schweißverbindung 140, die beispielsweise als Schweißnaht ausgeführt sein kann und die beiden Gehäuseschalen 120, 130 miteinander verbindet, ein abgeschlossenes Volumen mit dem Teilvolumen 730 sowie dem ersten und dem zweiten Volumen 720, 740 bildet.

Die entsprechenden Verschweißungen 870, 880 und 140 können hierbei sowohl als Schweißnähte wie auch als Schweißpunkte ausgeführt werden. Selbstverständlich können diese Verbindungstechniken auch gegebenenfalls durch andere, den Einsatzbedingungen angepasste und angemessene Verbindungstechniken ausgetauscht werden.

Fig. 1 zeigt darüber hinaus ein Wuchtgewicht 890, das im vorliegenden Fall mit der ersten Gehäuseschale 120 verschweißt ist. Dieses dient dem Ausgleich von Konstruktions-, Montage- oder anders bedingten Unwuchten und kann so entsprechende Unwuchten im Antriebsstrang des Fahrzeugs reduzieren. Die Position des Wuchtgewichts, wie es in Fig. 1 gezeigt ist, kann jedoch bei anderen Ausführungsbeispielen variieren.

Zwischen der Zuführung 810, die als Teil der vorderen Nabe 580 gebildet ist, und dem Gehäuse 110, genauer gesagt der zweiten Gehäuseschale 130, ist ferner eine Distanzscheibe 900 eingesetzt. Diese dient, wie im Nachfolgenden kurz erläutert wird, zur Einstellung eines Spiels zwischen den Lamellen, also der Einstellung des Spiels zwischen den ersten und zweiten Reibflächen 230, 240. So bestimmt das Spiel zwischen den Reibflächen 230, 240 einerseits die Fähigkeit der Kupplungsanordnung 100 den Momentenfluss zu unterbrechen sowie ein Ansprechverhalten beim Ein- oder Auskuppeln der Kupplungsanordnung 100.

Während im Interesse einer zuverlässigen Trennung der Reibflächen 230, 240 und damit im Interesse einer zuverlässigen Trennung des Drehmomentflusses tendenziell größerer Spiele S angezeigt sind, müssen diese jedoch von dem Anpresselement 620 im Falle des Einkuppelns bzw. des Auskuppelns überbrückt werden. Hierdurch kann es gerade bei einem kontrollierten Einrücken der Kupplungsanordnung 100 zu einem verzögerten Aufbau des Reibschlusses kommen, da zuvor das Spiel von dem Anpresselement 620 überbrückt werden muss. Eine Einstellung des Spiels der Lamellen kann daher gegebenenfalls ein Verhältnis zwischen einem Ansprechverhalten der Kupplung einerseits und einem Verschleiß der ersten und zweiten Reibflächen 230, 240 bzw. einer Trennfähigkeit der Kupplungsanordnung 100 verbessern.

Zu diesem Zweck weist die Kupplungsanordnung 100 gemäß einem Ausführungsbeispiel die zuvor beschriebene Distanzscheibe 900 auf. Die Distanzscheibe 900 kann hierbei - innerhalb entsprechender akzeptabler Toleranzbereiche - den jeweiligen Bauteildimensionen der Innenlamellen 270, der Außenlamellen 250, der Reibbeläge 260 und der weiteren gegebenenfalls vorhandenen Bauteile angepasst werden, die einen Einfluss auf das Lamellenspiel S haben. Hierbei kann das Lamellenspiel sowohl auf Basis zuvor vermessener Bauteildimensionen, als auch im Rahmen einer (Teil-) Montage der Kupplungsanordnung 100 und einer entsprechenden Bestimmung oder Messung des Lamellenspiels entlang der Drehachse 300 erfolgen.

Ist das Lamellenspiel S auf eine der beschriebenen Arten und Weisen bestimmt, kann dann eine entsprechende Distanzscheibe 900 beispielsweise aus einem Satz vorgefertigter Distanzscheiben eingesetzt werden. Diese kann selbstverständlich auch individuell eingeschliffen werden. Nach dem Einsetzen der entsprechenden Distanzscheibe 900 kann dann das Gehäuse 110 der Kupplungsanordnung 100 nach Fertigstellung der Montage beispielsweise mit den in Fig. 1 gezeigten Verschweißungen 870, 880, 140 verschlossen werden.

Die Distanzscheibe 900 kann darüber hinaus auch als zwei- oder mehrteilige Lösung implementiert werden. Bei der zwei- oder mehrteiligen Lösung der Distanzscheibe kann diese ein erstes Distanzscheibenbauteil und ein zweites Distanzscheibenbauteil umfassen, welche entlang ihres Umfangs wenigstens abschnittsweise ein keilförmiges Profil aufweisen. Hierdurch kann durch ein Verdrehen der beiden Distanzscheibenbauteile zueinander eine Dicke der Distanzscheibe entlang der Drehachse 300, also entlang der axialen Richtung durch ein Verdrehen der beiden Teile zueinander verändert werden.

Durch das Einsetzen einer solchen zwei- oder mehrteiligen Distanzscheibe, also einer Distanzscheibe 900 mit einer Mehrzahl von Distanzscheibenbauteilen kann so durch ein Verdrehen der zweiten Gehäuseschale 130 gegenüber der vorderen Nabe 580 im Falle der Einbauposition der Distanzscheibe 900, wie sie in Fig. 1 gezeigt ist, das Lamellenspiel S zwischen den Reibflächen 230, 240 eingestellt werden.

Der zweite Gehäusedeckel 130 weist bei dem in Fig. 1 gezeigten Ausführungsbeispiel einer Kupplungsanordnung 100 einen ebenen Abschnitt 910 an einer Außenfläche des Gehäuses 110 auf, an die die Anschweißschraube zur Befestigung der Kupplungsanordnung 100 bzw. zur Befestigung des Gehäuses 110 an einer Flexplatte eines Motors oder eines anderen Antriebsaggregats befestigt ist. Die Anschweißschraube 160 ist zu diesem Zweck über eine Verschweißung 920 mit dem ebenen Abschnitt 910 des Gehäuses 110 verbunden. Das Gehäuse 110 bzw. die zweite Gehäuseschale 130 weist jedoch an der dem Innenvolumen zugewandten Innenfläche 220 in diesem Bereich eine Ausnehmung 930 auf, sodass die zweite Gehäuseschale 130 in diesem Bereich eine geringere Materialstärke als in anderen Bereichen aufweist. Hierdurch ist es möglich, den Träger 390 für die Außenlamellen 250 derart zu gestalten, dass dieser bis in die Ausnehmung 930 hineinragt. Dies ermöglicht es, auch die Außenlamelle 250-1 als ebene Scheibe auszuführen, ohne eine Berührung des Abschnitts 370-1 oder der weiteren Mitnehmerfläche 380-1 auch unter schwierigen Betriebsbedingungen mit dem Gehäuse 110 befürchten zu müssen. Hierdurch kann eine zu der Außenlamelle 250-2 identische Außenlamelle 250-1 eingesetzt werden, ohne dass besondere Vorkehrungen im Bereich des Abschnitts 370 oder anderer gestalterischer Merkmale derselben berücksichtigt werden müssen.

Eine solche Ausnehmung 930, die einem ebenen Abschnitt 910 an dem Gehäuse 110 gegenüberliegt, kann beispielsweise durch das Schaffen eines so genannten S-Schlags im Bereich der zweiten Gehäuseschale 130 erfolgen. Der S-Schlag kann hierbei entlang des ganzen Umfangs vorgesehen werden, wohingegen die ebenen Abschnitte 910 sich entlang der Umfangsrichtung auf enge Raumbereiche beschränken können, in denen eine Verbindung mit der Anschweißschraube 160 erfolgen soll. Ist der S-Schlag in die zweite Gehäuseschale 130 eingebracht worden, kann dann durch ein Eindrücken derselben im Bereich der zu erzeugenden ebenen Abschnitte 910 dieser bereitgestellt werden. Das hierbei in das Innere des Gehäuses 110 eindringende Material, also das der Innenfläche 220 der zweiten Gehäuseschale 130 eindringende Material kann dann beispielsweise durch ein Abdrehen oder ein anderes spanendes Verfahren entfernt werden, um die Ausnehmung 930 zu schaffen.

Die im Zusammenhang mit Fig. 1 beschriebene Maßnahme der Schaffung des ebenen Abschnitts 910 zur Aufnahme der Anschweißschraube 160 oder eines anderen Zapfens zur Befestigung der Kupplungsanordnung an einem Antriebsaggregat oder einer anderen Einheit kann beispielsweise bei einer Kupplungsanordnung 100 sinnvoll oder notwendig sein, bei der eine besondere Lage des Antriebsstrangs bzw. seiner Komponenten notwendig ist. So handelt es sich bei der in Fig. 1 gezeigten Kupplungsanordnung 100 beispielsweise um eine solche, die für einen Quereinbau, also für eine Montage quer zur Fahrzeuglängsachse bestimmt ist. Ausführungsbeispiele einer solchen Kupplungsanordnung sind jedoch bei Weitem nicht auf solche Kupplungsanordnungen beschränkt. Sie können vielmehr auch für längs eingebaute Motoren und Getriebeeinheiten herangezogen werden.

Lediglich der Vollständigkeit halber soll an dieser Stelle noch erwähnt werden, dass das Anpresselement 620 nicht über eine formschlüssige Verbindung mit dem Gehäuse 110 gekoppelt ist. Werden also die durch die Nase 690 und andere Komponenten hervorgerufene kraftschlüssige Verbindung bzw. reibschlüssige Verbindung überwunden, ist das Anpresselement 620 gegenüber dem Gehäuse 110 "frei" drehbar. Eine solche Situation kann beispielsweise bei einem abrupten Drehzahlwechsel ohne ein erneutes Einkuppeln der Kupplungsanordnung 100 erfolgen. Beispiele hierfür stellen ein Abbremsen des Fahrzeugs ausgehend von einer hohen Motordrehzahl zum Stillstand (Stillstand des Abtriebsbauteils 190) dar, um nur ein Beispiel zu nennen. Die freie Drehbarkeit des Anpresselements 620 kann in einer solchen Situation gegebenenfalls zu einer Geräuschentwicklung aus dem Bereich der Kupplungsanordnung 100 führen, was beispielsweise vom Fahrer als störend empfunden werden kann.

Fig. 2 zeigt eine dreidimensionale Darstellung des Förderbauteils 340, wie es im Rahmen der Kupplungsanordnung 100 in Fig. 1 zum Einsatz kommt. Das Förderbauteil 340, das auch als Lamellenmitnahme bezeichnet wird, ist hierbei im Wesentlichen als vollständiger Ring ausgeführt, also ringförmig ausgebildet. Das Förderbauteil 340 weist hierbei eine Mehrzahl von regelmäßig entlang des Umfangs des Förderbauteils 340 angeordnete Zähne 940 auf, die sich über ringsegmentförmige Abschnitte 950 des Förderbauteils 340 erheben. Die Zähne 940 sind hierbei regelmäßig äquidistant angeordnet.

Jeder der Zähne, von denen in Fig. 2 lediglich einer mit einem Bezugszeichen bezeichnet ist, weist hierbei im Wesentlichen zwei senkrecht zu dem Abschnitt 950 verlaufende Zahnflanken auf, die die Förderflächen 330 bilden. Bei dem in Fig. 2 als Zahn 940 gekennzeichneten Zahn sind die beiden Förderflächen 330-1 und 330-2 durch eine Deckfläche 960 miteinander verbunden.

Wie im Zusammenhang mit Fig. 1 zuvor erläutert wurde, ist bei dem dort gezeigten Ausführungsbeispiel das Förderbauteil 340 mit dem Gehäuse 110, also dem Deckel der Kupplungsanordnung 100 über die Nietverbindung 350 verbunden. Zum Durchführen der Niete weist das Förderbauteil 340 an einigen der Abschnitte 950 entsprechende Öffnungen 970 auf, durch die die Nietverbindung mit dem Gehäuse 110 bzw. der zweiten Gehäuseschale 130 geschaffen wird. Genauer gesagt weist das in Fig. 2 gezeigte Förderbauteil hierbei insgesamt sechs Öffnungen 970 auf, die regelmäßig über den Umfang des Förderbauteils 340 verteilt sind. Selbstverständlich kann bei anderen Ausführungsbeispielen auch eine abweichende Anzahl von Öffnungen 970 implementiert sein, die regelmäßig oder auch unregelmäßig verteilt angeordnet sein können.

Das Förderbauteil 340 ist hierbei einstückig ausgebildet, ist also aus genau einem zusammenhängenden Materialstück gefertigt. Abgesehen von der Schaffung des Ausgangsmaterialstücks und der Öffnungen 970 ist hierbei das Förderbauteil 340 durch ein Umformen eines blechartigen Werkstücks hergestellt worden. Hierdurch kann eine vergleichsweise einfache und damit kostengünstige Herstellungsmethode verwendet werden. Bei anderen Ausführungsbeispielen, bei denen gegebenenfalls höhere Anforderungen an die Belastungen vorherrschen oder aber andere Randbedingungen ein anderes Herstellungsverfahren sinnvoller erscheinen lassen, können auch spanabhebende oder gusstechnische Herstellungsverfahren zur Schaffung des entsprechenden Förderbauteils 340 herangezogen werden.

Fig. 3 zeigt ebenfalls eine perspektivische oder dreidimensionale Darstellung eines Förderbauteilsegments 980. Das Förderbauteilsegment 980 ist hierbei ringsegmentförmig ausgestaltet und ebenfalls einstückig durch Umformen eines blechartigen Werkstücks geformt. Das Förderbauteilsegment 980 weist hierbei eine Länge entlang des Umfangs auf, die etwa einem 90°-Segment entspricht. Werden so vier entsprechende Förderbauteilsegmente 980 beispielsweise bei einer deckelseitigen Befestigung, wie dies in Fig. 1 dargestellt ist, aneinandergefügt, entsteht so ein Förderbauteil 340, wie dies in Fig. 1 gezeigt ist. Anders ausgedrückt kann bei einem Ausführungsbeispiel einer Kupplungsanordnung 100 gemäß einem Ausführungsbeispiel das Förderbauteil 340 auch eine Mehrzahl, beispielsweise vier Förderbauteilsegmente 980 umfassen. Selbstverständlich können bei anderen Ausführungsbeispielen auch andere Anzahlen von Förderbauteilsegmenten 980 zum Einsatz kommen, um ein Förderbauteil 340 im Rahmen einer Kupplungsanordnung 100 gemäß einem Ausführungsbeispiel zu schaffen.

Auch das in Fig. 3 gezeigte Förderbauteilsegment umfasst so eine entsprechende Mehrzahl von Zähnen 940, die über Abschnitte 950 hinausragen und an ihren Seitenflächen im Wesentlichen senkrecht zu den Abschnitten 950 verlaufende Förderflächen 330 aufweisen. Die Förderflächen 330 werden wiederum durch eine Deckfläche 960 miteinander verbunden. Zur Befestigung der Förderbauteilsegmente 980 an dem Gehäuse 110 weisen diese entsprechend ebenso Öffnungen 970 für eine Vernietung oder einen Steckkontakt, gegebenenfalls auch für eine Verschraubung oder eine andere Befestigungstechnik auf. Allerdings sind bei dem in Fig. 3 gezeigten Förderbauteilsegment 980 bereits zwei Öffnungen 970-1 und 970-2 vorgesehen, sodass bei einer Aneinanderreihung von vier entsprechenden Förderbauteilsegmenten 980 das daraus resultierende Förderbauteil 340 durch insgesamt acht Steckverbindungen oder Nietverbindungen mit dem Gehäuse 110 verbunden ist.

Unabhängig davon, wie genau das Förderbauteil 340 bei dem in Fig. 1 gezeigten Ausführungsbeispiel implementiert ist, ermöglichen es Ausführungsbeispiele einer Kupplungsanordnung 100 gemäß einem Ausführungsbeispiel jedoch, die Funktionalität der Schaffung eines Stroms des flüssigen Mediums, also beispielsweise des Öls, mit dem Antrieb des ersten Bauteils 280, also beispielsweise der Innenlamellen 270, über die gemeinsame Nutzung der Förderfläche 330 zu realisieren. Ausführungsbeispiele einer solchen Kupplungsanordnung 100 ermöglichen so die Mitnahme der Lamellen 270 in einer Nasskupplung, ohne dass ein zusätzlicher Lamellenträger für die betreffenden Innenlamellen vorgesehen werden muss. Das Förderbauteil 340 erfüllt hierbei gleichzeitig die Zusatzfunktion von Schaufeln zur Erzeugung des internen Ölkreislaufs. Kupplungsanordnungen 100 gemäß einem Ausführungsbeispiel können hierbei als Mehr-Lamellen-Kupplungen oder auch als Einscheibenkupplungen implementiert werden.

Die Mitnahme der Lamellen 270 (erste Bauteile 280) wird hierbei bei der in Fig. 1 gezeigten Mehr-Lamellen-Kupplungsanordnung mittels des mäanderförmigen Elements, nämlich dem Förderbauteil 340, realisiert. Das Förderbauteil 340 kann, wie in Fig. 2 gezeigt ist, als einteilige Lösung oder, wie in Fig. 3 gezeigt ist, als mehrere Segmente implementiert sein. Die Förderflächen 330 erzeugen hierbei den internen Ölkreislauf, dienen jedoch gleichzeitig zur Lamellenmitnahme.

Wie in Fig. 1 gezeigt wurde, kann hierbei das Förderbauteil 340 motorseitig an dem Deckel des Gehäuses, also an der zweiten Gehäuseschale 130 mittels Nieten oder anderer Verbindungstechniken angebracht werden, um das Drehmoment des Motors auf die Lamellen 270 zu übertragen. Die in den Fig. 1 bis 3 gezeigten Ausführungsbeispiele stellen so Kupplungsanordnungen 100 dar, bei denen die Lamellenmitnahme deckelseitig angebracht ist. Hierbei können Kupplungsanordnungen 100 durchaus auch für hohe Drehmomente von mehreren Hundert Newtonmetern (Nm) zum Einsatz kommen. Jedoch können auch Kupplungsanordnungen 100 gemäß Ausführungsbeispielen implementiert werden, bei denen höhere, jedoch auch niedrigere maximale Drehmomente übertragbar sind.

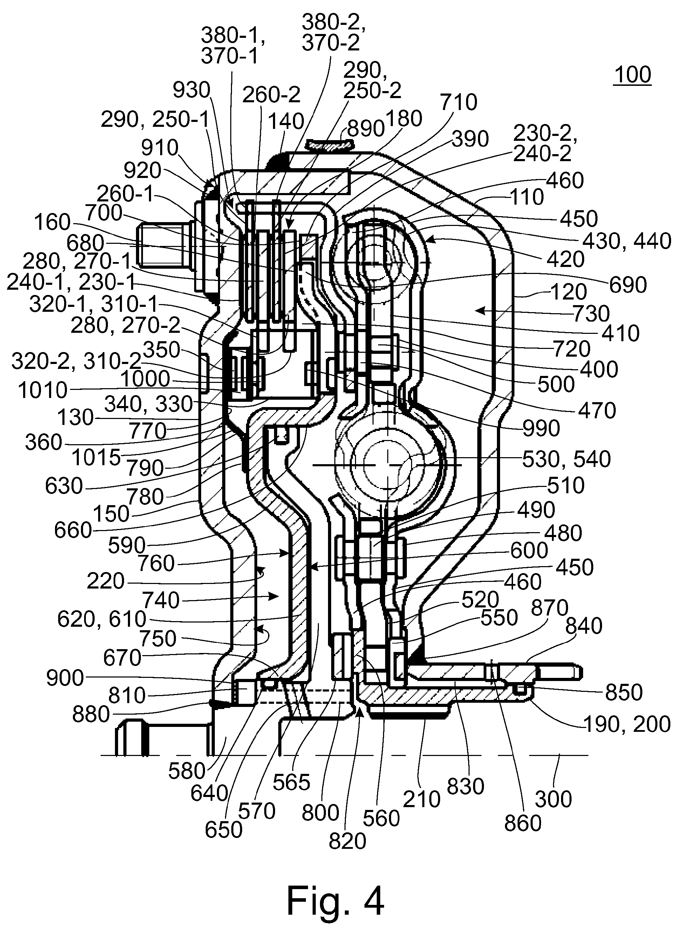

Fig. 4 zeigt ein entsprechendes Gesamtsystem einer Kupplungsanordnung 100 gemäß einem Ausführungsbeispiel, bei der das Förderbauteil 340 jedoch kolbenseitig befestigt ist.

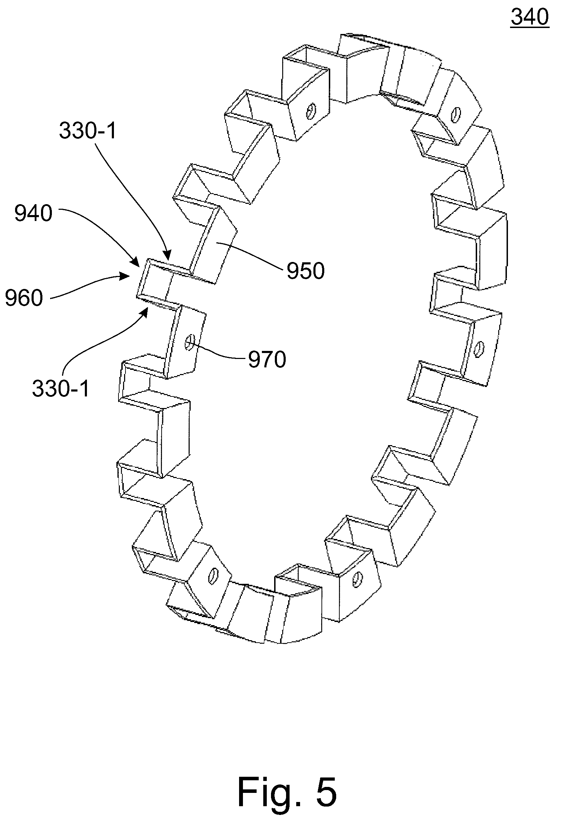

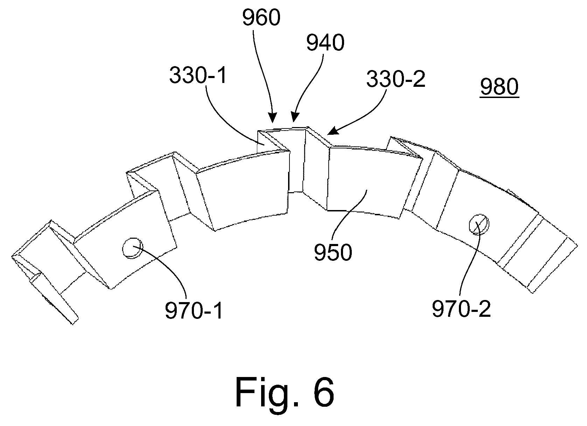

So weist die Kupplungsanordnung 100 gemäß einem Ausführungsbeispiel, wie sie in Fig. 4 gezeigt ist, zwar auch weiterhin ein Dichtelement 360 auf, ist jedoch über seine Nietverbindung 350, welche das Dichtelement 360 mit der zweiten Gehäuseschale 130 (Deckel) verbindet, nicht mehr unmittelbar mit dem Förderbauteil 340 verbunden. Das Förderbauteil 340, welches beispielsweise in den Fig. 5 und 6 näher gezeigt ist, ist vielmehr über eine Nietverbindung 990 mit dem Anpresselement 620 formschlüssig und damit drehfest verbunden. Das Förderbauteil 340 kann so beispielsweise über weitere Nietverbindungen 1000 mit einer Mehrzahl von Blattfederelementen 1010 formschlüssig verbunden, wobei die Blattfederelemente 1010 als Teil des Dichtelements 360 ausgeführt sind. Die Blattfederelemente 1010 sind hierbei durch eine Ausstellung des Materials des Dichtelements 360 ausgeformt und daher einstückig mit diesem gefertigt. Bei anderen Ausführungsbeispielen können jedoch die Blattfederelemente 1010 auch als separate Komponenten oder aber auch im Falle einer einstückigen Ausfertigung mit dem Dichtelement 360 mit Hilfe anderer Herstellungsverfahren gefertigt werden.

Selbstverständlich können bei anderen Ausführungsbeispielen auch andere Formen einer Drehmomentübertragung implementiert werden. So können beispielsweise Blattfederelemente 1010 zum Einsatz kommen, bei denen beispielsweise keine Löcher zur Aufnahme von Nietverbindungen oder anderen Verbindungselementen implementiert sind. Auch kann es beispielsweise möglich sein, die Blattfederelemente 1010 zunächst an einem Außen- oder Innendurchmesser des Dichtelements 360 zu formen und diese im Rahmen eines Biegens um beispielsweise mehr als 120° nach innen umzuformen. Ebenso kann es gegebenenfalls möglich sein, über eine reibschlüssige Verbindung die entsprechende Drehmomentübertragung zu realisieren.

Da das Dichtelement 360 über die Nietverbindung 350 drehfest mit dem Deckel, also der zweiten Gehäuseschale 130, verbunden ist, ergibt sich so eine im Wesentlichen drehfeste Verbindung zwischen dem als Antriebsbauteil 150 dienenden Gehäuse 110 und dem Anpresselement 620. Das Dichtelement 360 stellt daher hier auch ein Verbindungsbauteil 1015 dar. Hierdurch ist das Anpresselement 620 im Vergleich zu der in Fig. 1 gezeigten Kupplungsanordnung 100 nun nicht mehr "frei" drehbar, sondern im Wesentlichen formschlüssig mit dem Gehäuse 110 verbunden. Auch bei einer abrupten Drehzahländerung ohne ein erneutes Einkuppeln der Kupplungsanordnung 100 kann daher eine entsprechende Geräuschentwicklung durch ein frei rotierendes Anpresselement 620 bei dieser Implementierung nicht auftreten.

Die Verbindung zwischen dem Anpresselement 620 und dem Gehäuse 110 kann hierbei nur im Wesentlichen drehfest sein, da beispielsweise aufgrund von Deformationen, thermischen Effekten oder aber aufgrund der durch die Blattfederelemente 1010 gegebenen geometrischen Verhältnisse bei einer axialen Verschiebung des Anpresselements 620 eine Verdrehung zwischen dem Anpresselement 620 und dem Gehäuse 110 auftreten kann. Unabhängig davon folgt bei dem hier gezeigten Ausführungsbeispiel das Anpresselement 620 jedoch der Drehbewegung des Gehäuses 110.

Bei der in Fig. 4 gezeigten Variante ist also das Förderbauteil 340 auf der Kolbenseite angebracht, wobei eine Verbindung zu der als Deckel dienenden zweiten Gehäuseschale 130 mittels der Blattfederelemente 1010 erfolgt, um das Drehmoment des Motors auf die Innenlamellen 270 über die Förderfläche 330 zu übertragen. Die Blattfedern oder Blattfederelemente 1010 schaffen so die Verbindung des Förderbauteils 340 zu der motorseitigen zweiten Gehäuseschale 130. Die Blattfederelemente 1010 stehen hierbei in das erste Volumen 720 hinein, sodass diese bei einer Drehung des Gehäuses 110 und damit einer Drehung des Förderbauteils 340 relativ zu dem flüssigen Medium im Inneren des Gehäuses 110 ebenfalls die Fluidförderung und damit die Schaffung des Stroms des Fluides unterstützen. Auch die Blattfederelemente 1010 sind so für die Ölförderung unterstützend.

Auch wenn zuvor im Wesentlichen von Nietverbindungen 990, 1000, 350 die Rede war, können jedoch auch andere Verbindungstechniken zur Schaffung der entsprechenden im Wesentlichen drehfesten Verbindung zwischen dem Gehäuse 110 und dem Förderbauteil 340 verwendet werden. So können die entsprechenden Nietverbindungen einzeln oder auch zusammen gegen eine andere Verbindungstechnik, beispielsweise eine Steckverbindung, jedoch auch gegen andere form-, kraft- und/oder stoffschlüssige Verbindungen getauscht oder durch solche ergänzt werden.

Auch kann bei einem entsprechenden Ausführungsbeispiel der Einsatz der Blattfederelemente 1010 gegen andere Bauteile ausgetauscht werden, sofern diese ebenfalls eine axiale Verlagerung des Anpresselements 620, also entlang der Drehachse 300, unterstützen oder zumindest jedoch nicht behindern.

Fig. 5 zeigt eine dreidimensionale Darstellung des Förderbauteils 340, wie es bei dem in Fig. 4 gezeigten Ausführungsbeispiel einer Kupplungsanordnung 100 zum Einsatz kommen kann. Hinsichtlich der Ausgestaltung unterscheidet sich das Förderbauteil 340 von dem in Fig. 2 gezeigten Förderbauteil nur geringfügig. So ist auch dieses Förderbauteil 340 als vollständiger Ring ausgestaltet, der ebenfalls einstückig durch Umformen eines entsprechenden blechartigen Materialstücks hergestellt wurde. So weist auch hier das Förderbauteil 340 eine Mehrzahl von Zähnen 940 auf, die sich über ebene Abschnitte 950 erheben. Im Wesentlichen senkrecht zu den ebenen Abschnitten 950 erheben sich so die Förderflächen 330, die von einer im Wesentlichen parallel zu den Abschnitten 950 sich erstreckenden Deckfläche 960 verbunden werden. Auch hier weisen einige der Abschnitte 950 Öffnungen 970 auf, mit deren Hilfe das Förderbauteil 340 mit dem Anpresselement 620 über die Nietverbindung verbindbar ist. Zur Befestigung des Förderbauteils 340 weist dieses im vorliegenden Fall insgesamt sechs Öffnungen 970 auf, wobei jedoch bei anderen Ausführungsbeispielen die Zahl der Öffnungen 970 variieren kann.

Bei dem in Fig. 5 gezeigten Förderbauteil 340 sind in den Deckflächen 960 keine Öffnungen oder andere Strukturen zur Befestigung der weiteren Nietverbindung 1000 dargestellt. Es können jedoch abweichend von der Darstellung der Fig. 5 in einigen oder allen Deckflächen 960 der Zähne 940 entsprechende Öffnungen vorgesehen sein, mit denen das Förderbauteil 340 mit den Blattfederelementen 1010 verbunden werden kann. Alternativ kann gegebenenfalls auch die Implementierung der weiteren Nietverbindungen 1000 dadurch eingespart werden, dass die Blattfederelemente 1010 direkt mit Hilfe der Nietverbindungen 990 und den Öffnungen 970 verbunden werden. Hierdurch kann gegebenenfalls eine zusätzliche Scherbelastung der Zähne 940 vermieden werden.

Fig. 6 zeigt eine Fig. 3 entsprechende Darstellung eines Förderbauteilsegments 980, welches ebenfalls als ringsegmentförmiges Bauteil ausgeführt ist und im Wesentlichen ein 90°-Segment des Förderbauteils 340 bildet. Allerdings handelt es sich hier wiederum um ein Förderbauteilsegment 980 eines Förderbauteils 340 zur kolbenseitigen Befestigung. Auch das Förderbauteilsegment 980, wie es in Fig. 6 gezeigt ist, kann je nach konkreter Implementierung des zugehörigen Förderbauteils 340 weitere, in Fig. 6 nicht gezeigte Öffnungen im Bereich der Deckflächen 960 aufweisen. Ansonsten entspricht es im Wesentlichen dem Förderbauteilsegment 980 aus Fig. 3 unter der Maßgabe, dass dieses - wie in Fig. 5 gezeigt ist - zur kolbenseitigen Befestigung vorgesehen ist. Entsprechend sind die Orientierungen der Zähne 940 sowie der Förderflächen 330 zu verstehen.

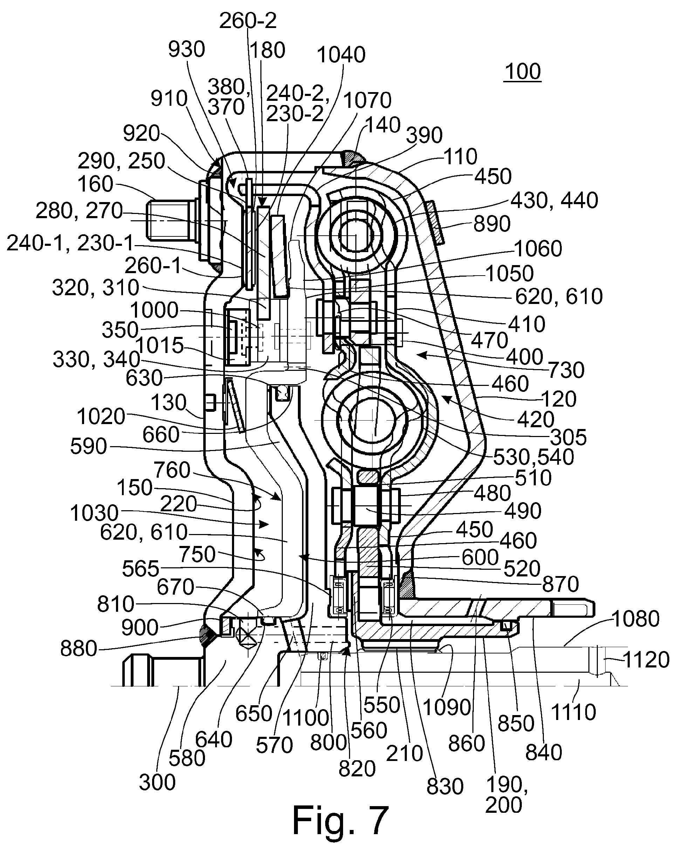

Fig. 7 zeigt ein weiteres Ausführungsbeispiel einer Kupplungsanordnung 100 gemäß einem Ausführungsbeispiel. Die Kupplungsanordnung 100 aus Fig. 7 unterscheidet sich von der in Fig. 4 gezeigten Kupplungsanordnung hinsichtlich einiger Komponenten, die im Nachfolgenden erläutert werden. Im Hinblick auf die weiteren Komponenten unterscheiden sich die beiden Kupplungsanordnungen 100 jedoch nur unwesentlich.

Zunächst ist festzuhalten, dass die Kupplungsanordnung 100, wie sie in Fig. 7 gezeigt ist, eine geringere Anzahl von Innen- und Außenlamellen 270, 250 aufweist. Genauer gesagt weist die Kupplungsanordnung 100 jeweils nur eine Außenlamelle 250 und eine Innenlamelle 270 auf. Die Innenlamelle 270, die das erste Bauteil 280 darstellt, steht hierbei wiederum über ihre Mitnehmerfläche 320 des Abschnitts 310 in Eingriff mit der Förderfläche 330 des Förderbauteils 340. Entsprechend ist das Förderbauteil 340 hinsichtlich seiner Ausdehnung entlang der Drehachse 300, also entlang der axialen Richtung, kürzer ausgeführt.

Darüber hinaus unterscheidet sich die Kupplungsanordnung 100 von der in Fig. 4 gezeigten Kupplungsanordnung ferner dadurch, dass die beiden Lager 565, 550, welche die axiale Führung des Abtriebsbauteils 190, also der unteren Nabe 200, ermöglichen, bei dieser Kupplungsanordnung 100 als axiale Nadellager ausgeführt sind. Selbstverständlich können bei anderen Ausführungsbeispielen auch andere axiale und/oder radiale Wälz- oder Gleitlager sowie Mischformen zum Einsatz kommen.

Die Kupplungsanordnung 100 aus Fig. 7 unterscheidet sich von der in Fig. 4 gezeigten ferner dadurch, dass nunmehr die zweite Gehäuseschale 130 im Bereich der Schweißverbindung 140 die erste Gehäuseschale 120 überlappt, also die Kupplungsanordnung 100 bzw. ihr Gehäuse 110 nach außen beschränkt. Entsprechend ist auch die Position des Wuchtgewichts 890 nicht mehr radial außen liegend angebracht, sondern an einer der Anschweißschraube 160 abgewandten Seite des Gehäuses 110 angeordnet.

Darüber hinaus unterscheidet sich die Kupplungsanordnung 100 aus Fig. 7 von der aus Fig. 4 dadurch, dass anstelle des Dichtelements 360 eine Tellerfeder 1020 zwischen der zweiten Gehäuseschale 130 und dem Anpresselement 620 angeordnet ist. Die Tellerfeder 1020 ist hierbei, wie auch das Dichtelement 360 aus Fig. 4, auf Druck vorgespannt, sodass es sich bei der Kupplungsanordnung 100 gemäß einem Ausführungsbeispiel erneut um eine Standard-Offen-Kupplungsanordnung handelt. Die Tellerfeder 1020 stellt im Unterschied zu dem Dichtelement 360 nicht notwendigerweise ein dichtendes Element dar, sodass die in Fig. 4 eingezeichneten ersten und zweiten Volumina 720, 740 hier ein gemeinsames Volumen 1030 bilden können. Selbstverständlich können bei anderen Ausführungsbeispielen auch andere Federelemente als die Tellerfeder 1020 zum Einsatz kommen. Je nach Ausgestaltung kann das gemeinsame Volumen 1030 daher wiederum in entsprechende erste und zweite Volumina 720, 740 zerfallen.

Ebenso kann die Tellerfeder 1020 beispielsweise gegen eine Membranfeder, eine Anordnung von Schraubenfedern oder ein anderes Federelement ausgetauscht werden. Darüber hinaus kann bei anderen Ausführungsbeispielen selbstverständlich die Tellerfeder 1020 bzw. das gegen die Tellerfeder 1020 ausgetauschte Federelement auch auf Zug vorgespannt sein. Dementsprechend kann es sich auch bei dieser Kupplungsanordnung 100 gemäß einem Ausführungsbeispiel um eine Standard-Geschlossen-Kupplungsanordnung handeln.

Zur Schaffung der im Wesentlichen drehfesten Verbindung zu dem Förderbauteil 340 dient bei diesem Ausführungsbeispiel ein Verbindungsbauteil 1015, das über die Nietverbindung 350 mit dem Deckel, also der zweiten Gehäuseschale 130 mechanisch drehfest verbunden ist. Es können jedoch bei anderen Ausführungsbeispielen auch andere Verbindungstechniken an dieser Stelle eingesetzt werden.

Das Verbindungsbauteil 1015 weist eine Mehrzahl von Blattfedern 1010 auf, die in der bereits im Zusammenhang mit Fig. 4 beschriebenen Art und Weise die im Wesentlichen drehfeste Verbindung zu dem Förderbauteil 340 schaffen. Zu diesem Zweck ist das Verbindungsbauteil 1015 bzw. seine Blattfedern 1010 über die weiteren Nietverbindungen 1000 mit dem Förderbauteil 340 mechanisch drehfest verbunden. Auch hier können aber andere Verbindungstechniken eingesetzt werden, wie sie beispielsweise im Zusammenhang mit Fig. 4 beschrieben wurden.

Aber auch das Anpresselement 620 ist bei der in Fig. 7 gezeigten Kupplungsanordnung 100 unterschiedlich ausgestaltet. So weist das Anpresselement 620 zwar wiederum einen Kolben 610 auf, umfasst jedoch zusätzlich eine Anlege-Tellerfeder 1040. Die Anlege-Tellerfeder 1040 ist hierbei als im Wesentlichen ringförmige Struktur ausgestaltet. Sie steht an einem dem äußeren radialen Ende der Anlege-Tellerfeder 1040 näheren Bereich mit der Innenlamelle 270, welches auch hier das erste Bauteil 280 darstellt, in Kontakt, während sie sich an einer Schulter 1050 des Anpresselements 620 an einem radial innen gelegenen Bereich der Anlege-Tellerfeder 1040 abstützt. Hierdurch ergibt sich ein in Fig. 7 nicht eingezeichneter Abstand bzw. Spalt S2 zwischen der Anlege-Tellerfeder 1040 im Bereich der Schulter 1050, also an einem radial innen liegenden Bereich, im Vergleich zu der Innenlamelle 270.

Die Schulter 1050 des Anpresselements 620 erstreckt sich hierbei nur über einen kleinen radialen Bereich, an dem sich radial nach außen eine Kragenstruktur 1060 mit einem Anpresspunkt 1070 anschließt. Der Anpresspunkt 1070 stellt hierbei häufig den der Anlege-Tellerfeder 1040 nächsten Punkt der Kragenstruktur 1060 dar. In der Ruheposition des Anpresselements 620 weist der Anpresspunkt 1070 hierbei von der Anlege-Tellerfeder 1040 einen Abstand oder Spalt S2 entlang der axialen Richtung, also entlang der Drehachse 300, auf, der den Spalt S1 nicht übersteigt. Darüber hinaus weit der Anpresspunkt 1070 einen Abstand von der Drehachse 300 senkrecht zu dieser auf, der größer als die Ausdehnung der Schulter 1050 entlang der radialen Richtung ist, jedoch einen Außendurchmesser der Anlege-Tellerfeder 1040 nicht übersteigt.

Anders ausgedrückt wird, da der Spalt S2 den Spalt S1 nicht übersteigt, gegebenenfalls sogar kleiner als dieser ist, liegt das Anpresselement 620 über dem Anpresspunkt 1070 im Wesentlichen auf Höhe des Reibradius an der Anlege-Tellerfeder 1040 an. Durch eine entsprechende Kragenradiusgröße kann so der Ort des Andrückens definiert bzw. festgelegt werden. Genauer gesagt handelt es sich bei dem Anpresspunkt 1070 aufgrund der im Wesentlichen rotationsförmigen Ausgestaltung des Anpresselements 620 und der Anlege-Tellerfeder 1040 eher um eine Anpresslinie.

Wird nun das Anpresselement 620 betätigt, sodass sich dieses in Richtung auf die Reibflächen 230, 240 zubewegt, erzeugt oder verstärkt die Anlege-Tellerfeder 1040 die auf die Innenlamelle 270 ausgeübte Kraft. Hierbei kommt es aufgrund der Struktur der Anlege-Tellerfeder 1040 zu einer Deformation derselben, sodass die Anlege-Tellerfeder leicht deformiert wird und an der Innenlamelle 270 "abrollt". Hierdurch kann es gegebenenfalls zu einer leichten Verschiebung des Abstands der maximalen Krafteinwirkung auf die Innenlamelle 270 kommen. Aufgrund der Ausgestaltung des Reibpakets 180 entspricht hierbei gerade der Punkt der maximalen Anpresskraft in etwa einem Radius, an dem die größten Anpresskräfte im Bereich der Reibbeläge 260 auftreten. Dieser Radius wird daher auch als Reibradius bezeichnet.

Wird nun das Anpresselement 620 weiter bewegt, sodass der Anpresspunkt 1070 mit der Anlege-Tellerfeder 1040 in Kontakt kommt, wenn also der Spalt S2 überbrückt ist, definiert nunmehr der radiale Abstand des Anpresspunkts von der Drehachse 300 die Lage des Reibradius. Hierdurch kann dieser gezielter definiert werden, was gegebenenfalls zu einem geringeren Verschleiß, einer ungleichmäßigen Abnutzung und/oder einer besseren Wärmeabfuhr durch das die Reibflächen 230, 240 durchströmende flüssige Medium ermöglicht. Hierbei steigt die Zahl der zusätzlichen Bauteile gegenüber der in Fig. 1 und 4 gezeigten Ausgestaltung des Anpresselements 620 nur geringfügig an, da nunmehr zusätzlich die Anlege-Tellerfeder 1040 implementiert wird.

Selbstverständlich können bei anderen Ausführungsbeispielen auch abweichende Geometrien der Kragenstruktur mit dem Anpresspunkt 1070 implementiert werden. So kann beispielsweise anstelle eines einzelnen Anpresspunkts 1070 auch eine Anpressfläche mit mehr als einem Anpresspunkt 1070 vorgesehen werden. Ebenso kann anstelle der Anlege-Tellerfeder 1040 auch eine Membranfeder oder ein anderes Federelement eingesetzt werden.

Fig. 7 zeigt darüber hinaus schematisch die bereits zuvor erwähnte Getriebeeingangswelle 1080 mit ihrer in die Innenverzahnung 210 eingreifenden Außenverzahnung 1090, die die drehfeste Verbindung zu der unteren Nabe 200, also dem Abtriebsbauteil 190, ermöglicht. Wie bereits zuvor erwähnt wurde, weist die Außenverzahnung 1090 einige fehlende Zähne auf, um einen Durchfluss des flüssigen Mediums zu dem Zuflussbereich 820 zu ermöglichen.

Darüber hinaus zeigt Fig. 7 eine Nut mit einem Dichtelement 1100, die sich in Umfangsrichtung um die Getriebeeingangswelle 1080 zwischen dem Zuflussbereich 820 und der Zulaufbohrung 650 des Kolbendruckraums 590 erstreckt. Diese steht in Kontakt mit der vorderen Nabe 580 und dichtet den Zuflussbereich 820 von der Zulaufbohrung 650 ab. Um die Zulaufbohrung 650 und damit den Kolbendruckraum 590 mit dem flüssigen Medium versorgen zu können, weist die Getriebeeingangswelle 1080 ferner einen Zulaufkanal 1110 auf, der symmetrisch und entlang der Drehachse 300 ausgerichtet ist. Über eine Anschlussbohrung 1120 kann der Zulaufkanal 1110 mit dem flüssigen Medium zum Befüllen des Kolbendruckraums 590 versorgt werden.

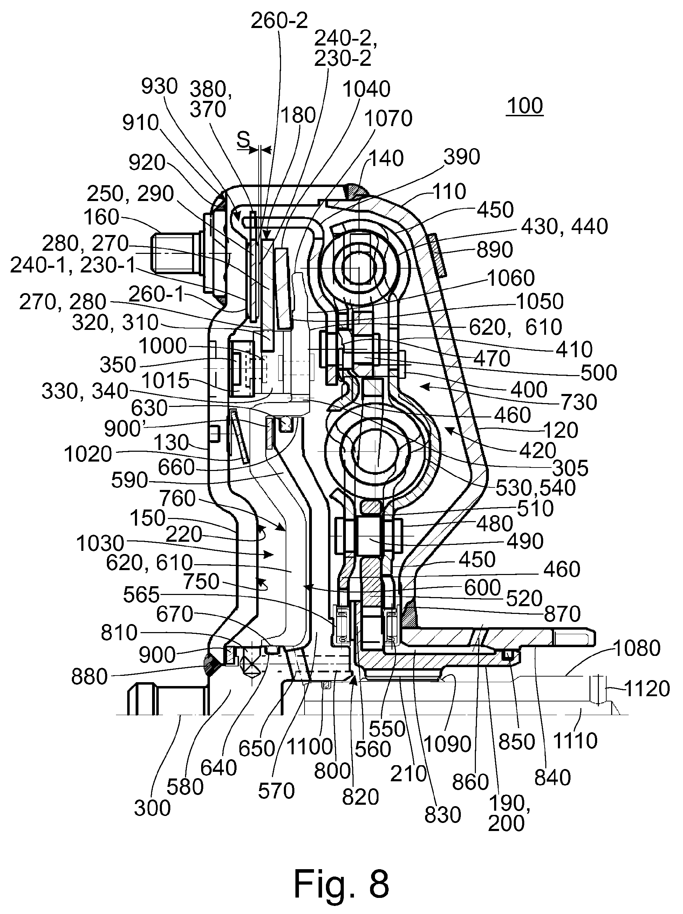

Fig. 8 zeigt ein weiteres Ausführungsbeispiel einer Kupplungsanordnung 100 gemäß einem Ausführungsbeispiel, bei der neben der bereits zuvor gezeigten Distanzscheibe 900 eine weitere Distanzscheibe 900' integriert ist. Die weitere Distanzscheibe 900' kann hierbei ebenso als einteilige oder als mehrteilige Distanzscheibe implementiert werden, wie dies bereits zuvor beschrieben wurde. Die Distanzscheibe 900' ist hierbei zwischen der Trennwand 570 und dem Anpresselement 620 im Bereich des Kolbendruckraums 590 angeordnet. Hierdurch kann das Lamellenspiel S auch durch eine Variation der Position des Anpresselements 620 variiert werden. Zusammen mit der Distanzscheibe 900 kann so das Lamellenspiel S durch Variation des Abstands der zweiten Gehäuseschale 130 oder aber auch durch Variation des Abstands des Anpresselements 620 variiert werden.

Selbstverständlich ist es bei Weitem nicht notwendig, beide Distanzscheiben 900, 900' gleichzeitig zu implementieren. Eine entsprechende Einstellung des Lamellenspiels S kann bereits bei der Implementierung einer einzigen der beiden Distanzscheiben 900 realisiert werden, ohne dass hierdurch der für die Kupplungsanordnung 100 notwendige Bauraum ansteigt. Sowohl der Einsatz einer einzigen Distanzscheibe 900 oder 900', wie auch der Einsatz beider Distanzscheiben 900, 900' ermöglicht es vielmehr, das Lamellenspiel S einzustellen und dabei gleichzeitig den notwendigen axialen Bauraum der Kupplungsanordnung 100 gegenüber konventionellen Lösungen zu verringern.

Ansonsten unterscheidet sich das in Fig. 8 gezeigte Ausführungsbeispiel einer Kupplungsanordnung 100 nicht von dem in Fig. 7 gezeigten, weshalb an dieser Stelle auf die Beschreibung der Fig. 7 verwiesen wird.

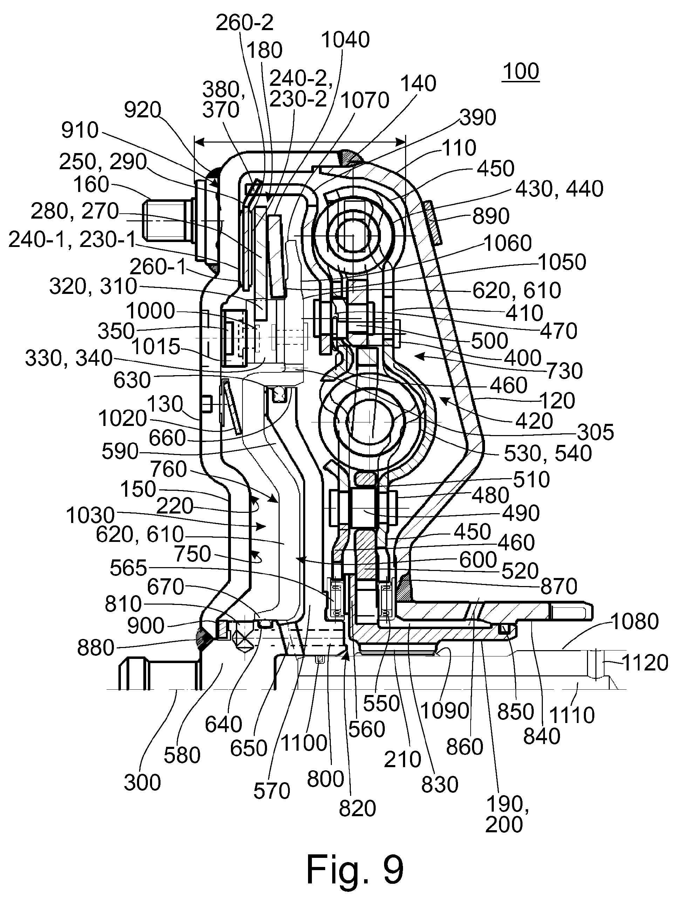

Fig. 9 zeigt schließlich eine weitere Variation der in Fig. 7 gezeigten Kupplungsanordnung 100, die sich im Wesentlichen von dieser Kupplungsanordnung 100 dadurch unterscheidet, dass die Ausnehmung 930 nicht implementiert ist. Als Folge ist der Träger 390 in axialer Richtung kürzer ausgestaltet, sodass der Abschnitt 370 mit der weiteren Mitnehmerfläche 380 der Außenlamelle 250, die wiederum das (zweite Bauteil 290) darstellt, gekröpft ausgeführt ist, also gegenüber der Drehachse 300 um einen vorbestimmten Winkel von der zweiten Gehäuseschale 130 weg geknickt ist.

Abgesehen von dieser Variation unterscheidet sich die Kupplungsanordnung 100 aus Fig. 9 jedoch ebenfalls nicht von der in Fig. 7 gezeigten Kupplungsanordnung 100.

Ausführungsbeispiele einer Kupplungsanordnung 100 ermöglichen so eine Lamellenmitnahme unter gleichzeitiger Bereitstellung einer Schaufelfunktion für ein flüssiges Medium, welches sich in dem Gehäuse 110 der Kupplungsanordnung 100 befinden kann. Kupplungsanordnungen 100 können so für unterschiedliche Kupplungsanwendungen vorgesehen werden, beispielsweise für Fahrzeuge mit einem im vorderen Bereich des Fahrzeugs eingebauten und quer zur Fahrtrichtung ausgebildeten Automatikgetriebe. Kupplungsanordnungen 100 gemäß einem Ausführungsbeispiel können so als Anfahrkupplungen, jedoch auch als Trennkupplungen im Zusammenhang mit synchronisierten Getrieben oder im Zusammenhang mit längs eingebauten Motoren verwendet werden. Als flüssiges Medium kann beispielsweise ein Öl dienen.

Die oben beschriebenen Ausführungsbeispiele stellen hierbei lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, wie anhand der Beschreibung und der Erläuterung der Ausführungsbeispiele hierin präsentiert wurden, beschränkt sei.

### Bezugszeichen

- 100: Kupplungsanordnung
- 110: Gehäuse
- 120: erste Gehäuseschale
- 130: zweite Gehäuseschale
- 140: Schweißverbindung
- 150: Antriebsbauteil
- 160: Anschweißschraube
- 170: Innenfläche
- 180: Reibpaket
- 190: Abtriebsbauteil
- 200: untere Nabe
- 210: Innenverzahnung
- 220: Innenfläche
- 230: erste Reibfläche
- 240: zweite Reibfläche
- 250: Außenlamelle
- 260: Reibbelag
- 270: Innenlamelle
- 280: erstes Bauteil
- 290: zweites Bauteil
- 300: Drehachse
- 305: Durchlassöffnung
- 310: Abschnitt
- 320: Mitnehmerfläche
- 330: Förderfläche
- 340: Förderbauteil
- 350: Nietverbindung
- 360: Dichtelement
- 370: Abschnitt
- 380: weitere Mitnehmerfläche
- 390: Träger
- 400: Nietverbindung
- 410: erste Nabenscheibe
- 420: Schwingungsdämpfer
- 430: erstes Federelement
- 440: Schraubenfeder
- 450: erstes Abdeckblech
- 460: zweites Abdeckblech
- 470: Langloch
- 480: weitere Nietverbindung
- 490: Distanzstück
- 500: Distanzstück
- 510: Langloch
- 520: zweite Nabenscheibe
- 530: zweites Federelemente
- 540: Schraubenfeder
- 550: Lager
- 560: Abschnitt
- 565: weiteres Lager
- 570: Trennwand
- 580: vordere Nabe
- 590: Kolbendruckraum
- 600: Kolbenfläche
- 610: Kolben
- 620: Anpresselement
- 630: Dichtelement
- 640: Dichtelement
- 650: Zulaufbohrung
- 660: Dichtfläche
- 670: Dichtfläche
- 680: erste Anpressfläche
- 690: Nase
- 700: zweite Anpressfläche
- 710: Abschnitt
- 720: erstes Volumen
- 730: Teilvolumen
- 740: zweites Volumen
- 750: Oberflächenabschnitt
- 760: Kolbenrückseite
- 770: erste Dichtfläche
- 780: zweite Dichtfläche
- 790: Übergangsabschnitt
- 800: Zuleitungskanal
- 810: Zuführung
- 820: Zuflussbereich
- 830: Abflussbereich
- 840: Pumpennabe
- 850: Dichtelement
- 860: Öffnung
- 870: Verschweißung
- 880: Verschweißung
- 890: Wuchtgewicht
- 900: Distanzscheibe
- 910: ebener Abschnitt
- 920: Verschweißung
- 930: Ausnehmung
- 940: Zahn
- 950: Abschnitt
- 960: Deckfläche
- 970: Öffnung
- 980: Förderbauteilsegment
- 990: Nietverbindung
- 1000: weitere Nietverbindung
- 1010: Blattfederelemente
- 1015: Verbindungsbauteil
- 1020: Tellerfeder
- 1030: Volumen
- 1040: Anlege-Tellerfeder
- 1050: Schulter
- 1060: Kragenstruktur
- 1070: Anpresspunkt
- 1080: Getriebeeingangswelle
- 1090: Außenverzahnung
- 1100: Nut mit Dichtelement
- 1110: Zulaufkanal
- 1120: Anschlussbohrung

## Patentansprüche

1. Kupplungsanordnung (100), beispielsweise für einen Antriebsstrang eines Fahrzeugs, mit folgenden Merkmalen:
ein wenigstens abschnittsweise scheibenförmiges erstes Bauteil (280), das an dem scheibenförmigen Abschnitt eine erste Reibfläche (230) aufweist;
ein wenigstens abschnittsweise scheibenförmiges zweites Bauteil (290), das an dem scheibenförmigen Abschnitt eine zweite Reibfläche (240) aufweist, wobei die erste und die zweite Reibfläche (230, 240) ausgebildet und angeordnet sind, um miteinander in einen Reibeingriff bringbar zu sein und in einem Betrieb mit einem flüssigen Medium in Kontakt zu stehen; und
einem Förderbauteil (340), das eine Förderfläche (330) für das flüssiges Medium umfasst, und das mit einem Antriebsbauteil (150) im Wesentlichen drehfest derart gekoppelt ist, dass die Förderfläche (330) einen Strom des flüssigen Mediums bei einer Drehung relativ zu dem flüssigen Medium bewirkt;
wobei das Förderbauteil (340) über die Förderfläche (330) derart mit dem ersten Bauteil (280) in Eingriff steht, dass bei einer Drehung des Förderbauteils (340) das erste Bauteil (280) in eine Drehung versetzt wird; und
wobei das erste Bauteil (280) eine Innenlamelle (270) ist.

2. Kupplungsanordnung (100) nach Anspruch 1, bei der das erste Bauteil (280) über eine Mitnehmerfläche (320) derart mit dem Förderbauteil (340) in Eingriff steht, dass eine Berührfläche zwischen der Mitnehmerfläche (320) und der Förderfläche (330) höchstens 50 % einer Fläche der Förderfläche (330) ist.

3. Kupplungsanordnung (100) nach einem der vorhergehenden Ansprüche, bei der die Förderfläche (330) zusammenhängend und eben ist.

4. Kupplungsanordnung (100) nach einem der vorhergehenden Ansprüche, bei der die Förderfläche (330) im Wesentlichen senkrecht zu einer tangentialen Richtung ausgerichtet ist, die senkrecht auf einer Drehachse (300) des erstens Bauteils (280) und einer von der Drehachse (300) senkrecht wegweisenden radialen Richtung steht.

5. Kupplungsanordnung (100) nach einem der vorhergehenden Ansprüche, bei der das Förderbauteil (340) im Wesentlichen ringförmig ausgebildet ist.

6. Kupplungsanordnung (100) nach Anspruch 5, bei der das Förderbauteil (340) einstückig ausgebildet ist oder bei dem das Förderbauteil (340) eine Mehrzahl von ringsegmentförmigen Förderbauteilsegmenten (980) umfasst, wobei jedes ringsegmentförmige Förderbauteilsegment (980) einstückig ausgebildet ist.

7. Kupplungsanordnung (100) nach Anspruch 6, bei der das Förderbauteil (340) oder die ringsegmentförmigen Förderbauteilsegmente (980) durch ein Umformen eines blechartigen Werkstücks, durch ein spanabhebendes oder ein gusstechnisches Herstellungsverfahren hergestellt sind.

8. Kupplungsanordnung (100) nach einem der vorhergehenden Ansprüche, bei der das Antriebsbauteil (150) ein mit dem flüssigen Medium befüllbares oder befülltes Gehäuse (110) ist, und bei der das Förderbauteil (340) durch eine im Wesentlichen formschlüssige Verbindung mit dem Gehäuse (110) verbunden ist.

9. Kupplungsanordnung (100) nach Anspruch 8, bei der das Förderbauteil (340) durch eine Nietverbindung (350) und/oder eine Steckverbindung mit dem Gehäuse (110) drehfest verbunden ist.

10. Kupplungsanordnung (100) nach Anspruch 8, die ferner ein Anpresselement (620) aufweist, das ausgebildet und angeordnet ist, um auf eine Betätigung hin die erste und die zweite Reibfläche (230, 240) miteinander in den Reibeingriff zu bringen und/oder den Reibeingriff zu trennen, wobei das Förderbauteil (340) mit dem Anpresselement (620) drehfest, beispielsweise durch eine Nietverbindung (990) und/oder eine Steckverbindung, verbunden ist, wobei das Gehäuse (110) mit einem Verbindungsbauteil (1015) drehfest, beispielsweise durch eine Nietverbindung (350) und/oder eine Steckverbindung, verbunden ist, und wobei das Verbindungsbauteil (1015) mit dem Förderbauteil (340) im Wesentlichen drehfest, beispielsweise durch eine Nietverbindung (1000) und/oder eine Steckverbindung, verbunden ist.

11. Kupplungsanordnung (100) nach Anspruch 10, bei der das Verbindungsbauteil (1015) eine Mehrzahl von Blattfederelementen (1010) aufweist, die mit dem Förderbauteil (340) formschlüssig, beispielsweise durch eine Nietverbindung (1000) und/oder eine Steckverbindung, verbunden sind, um die im Wesentlichen drehfeste Verbindung zwischen dem Förderbauteil (340) und dem Verbindungsbauteil (1015) zu schaffen.

12. Kupplungsanordnung (100) nach einem der Ansprüche 8 bis 11, bei der das erste Bauteil (280) ein scheibenförmiges Bauteil mit einer zentralen Ausnehmung umfasst, wobei die erste Reibfläche (230) an einer im Wesentlichen senkrecht zu einer Drehachse (300) des ersten Bauteils (280) ausgerichteten Hauptoberfläche des scheibenförmigen Bauteils angeordnet ist, wobei der Eingriff mit dem Förderbauteil (340) an einer Seitenfläche eines in die zentrale Ausnehmung hineinragenden Abschnitts (310) des scheibenförmigen Bauteils erfolgt, wobei das zweite Bauteil (290) ein weiteres scheibenförmiges Bauteil mit einer zentralen Ausnehmung umfasst, wobei das weitere scheibenförmige Bauteil an einem Außenradius desselben mit einem Träger (390) in Eingriff steht.

13. Kupplungsanordnung (100) nach Anspruch 12, die ferner ein Anpresselement (620) aufweist, das ausgebildet und angeordnet ist, um auf eine Betätigung hin die erste und die zweite Reibfläche (230, 240) miteinander in den Reibeingriff zu bringen und/oder den Reibeingriff zu trennen, wobei das Anpresselement (620) wenigstens teilweise ein von dem flüssigen Medium gefülltes erstes Volumen (720) begrenzt, das in einer Querschnittsebene, in der die Drehachse (300) verläuft, eine Querschnittsfläche umfasst, die höchstens ein 20-Faches einer Querschnittsfläche der Förderfläche (330) in der Querschnittsebene entspricht.

14. Kupplungsanordnung (100) nach Anspruch 13, bei der das Anpresselement (620) eine Durchlassöffnung (305) in das erste Volumen (720) für das flüssige Medium aufweist, die entlang der radialen Richtung auf Höhe der Förderfläche (330) oder näher zu der Drehachse (300) angeordnet ist, wobei das erste und/oder das zweite Bauteil (280, 290) und der Träger (390) in einem Betriebszustand, in dem der Reibeingriff besteht, von dem flüssigen Medium durchströmbar sind, sodass bei einer Drehung der Förderfläche (330) gegenüber dem flüssigen Medium ein Strom desselben radial nach außen durch die oder entlang der ersten und/oder der zweiten Reibfläche (230, 240) durch die Förderfläche (330) hervorgerufen wird.

15. Kupplungsanordnung (100) nach einem der vorhergehenden Ansprüche, die ferner ein Anpresselement (620) aufweist, das ausgebildet und angeordnet ist, um auf eine Betätigung hin die erste und die zweite Reibfläche (230, 240) miteinander in den Reibeingriff zu bringen und/oder den Reibeingriff zu trennen, wobei das Anpresselement (620) eine Durchlassöffnung (305) in das erste Volumen (720) für das flüssige Medium aufweist, die entlang der radialen Richtung auf Höhe der Förderfläche (330) oder näher zu der Drehachse (300) angeordnet ist, wobei das erste und/oder das zweite Bauteil (280, 290) und der Träger (390) in einem Betriebszustand, in dem der Reibeingriff besteht, von dem flüssigen Medium durchströmbar sind, sodass bei einer Drehung der Förderfläche (330) gegenüber dem flüssigen Medium ein Strom desselben radial nach außen durch die oder entlang der ersten und/oder der zweiten Reibfläche (230, 240) durch die Förderfläche (330) hervorgerufen wird.

## Claims

1. Clutch arrangement (100), for example for a drive train of a vehicle, having the following features:
a first component (280) which is disc-shaped at least in sections and has a first friction face (230) on the disc-shaped section;
a second component (290) which is disc-shaped at least in sections and has a second friction face (240) on the disc-shaped section, the first and the second friction face (230, 240) being configured and arranged so as to be capable of being brought into a frictional engagement with one another and of being in contact with a liquid medium during operation; and
a delivery component (340) which comprises a delivery face (330) for the liquid medium, and which is coupled substantially fixedly to a drive component (150) so as to rotate with it in such a way that the delivery face (330) brings about a flow of the liquid medium in the case of a rotation relative to the liquid medium;
the delivery component (340) being in engagement with the first component (280) via the delivery face (330) in such a way that, in the case of a rotation of the delivery component (340), the first component (280) is set in rotation; and
the first component (280) being an internal fin (270).

2. Clutch arrangement (100) according to Claim 1, in which the first component (280) is in engagement with the delivery component (340) via a driver face (320) in such a way that a contact area between the driver face (320) and the delivery face (330) is at most 50% of an area of the delivery face (330).

3. Clutch arrangement (100) according to either of the preceding claims, in which the delivery face (330) is contiguous and planar.

4. Clutch arrangement (100) according to one of the preceding claims, in which the delivery face (330) is oriented substantially perpendicularly with respect to a tangential direction which lies perpendicularly on a rotational axis (300) of the first component (280) and a radial direction which points perpendicularly away from the rotational axis (300).

5. Clutch arrangement (100) according to one of the preceding claims, in which the delivery component (340) is of substantially annular configuration.

6. Clutch arrangement (100) according to Claim 5, in which the delivery component (340) is of integral configuration, or in which the delivery component (340) comprises a plurality of annular segment-shaped delivery component segments (980), each annular segment-shaped delivery component segment (980) being configured in one piece.

7. Clutch arrangement (100) according to Claim 6, in which the delivery component (340) or the annular segment-shaped delivery component segments (980) is/are produced by way of reshaping of a metal sheet-like workpiece, by way of a machining or a casting production process.

8. Clutch arrangement (100) according to one of the preceding claims, in which the drive component (150) is a housing (110) which can be filled or is filled with the liquid medium, and in which the delivery component (340) is connected to the housing (110) by way of a substantially positively locking connection.

9. Clutch arrangement (100) according to Claim 8, in which the delivery component (340) is connected fixedly to the housing (110) so as to rotate with it by way of a riveted connection (350) and/or a plugged connection.

10. Clutch arrangement (100) according to Claim 8, which, furthermore, has a pressing element (620) which is configured and arranged so as to bring the first and the second friction face (230, 240) into the frictional engagement with one another and/or to disconnect the frictional engagement upon an actuation, the delivery component (340) being connected fixedly to the pressing element (620) so as to rotate with it, for example by way of a riveted connection (990) and/or a plugged connection, the housing (110) being connected fixedly to a connecting component (1015) so as to rotate with it, for example by way of a riveted connection (350) and/or a plugged connection, and the connecting component (1015) being connected substantially fixedly to the delivery component (340) so as to rotate with it, for example by way of a riveted connection (1000) and/or a plugged connection.

11. Clutch arrangement (100) according to Claim 10, in which the connecting component (1015) has a plurality of leaf spring elements (1010) which are connected in a positively locking manner to the delivery component (340), for example by way of a riveted connection (1000) and/or a plugged connection, in order to provide the substantially fixed connection in terms of rotation between the delivery component (340) and the connecting component (1015).

12. Clutch arrangement (100) according to one of Claims 8 to 11, in which the first component (280) comprises a disc-shaped component with a central recess, the first friction face (230) being arranged on a main surface of the disc-shaped component, which main surface is oriented substantially perpendicularly with respect to a rotational axis (300) of the first component (280), the engagement with the delivery component (340) taking place on a side face of a section (310) of the disc-shaped component, which section (310) protrudes into the central recess, the second component (290) comprising a further disc-shaped component with a central recess, the further disc-shaped component being in engagement on an outer radius thereof with a support (390).

13. Clutch arrangement (100) according to Claim 12, which, furthermore, has a pressing element (620) which is configured and arranged so as to bring the first and the second friction face (230, 240) into the frictional engagement with one another and/or to disconnect the frictional engagement upon an actuation, the pressing element (620) delimiting at least partially a first volume (720) which is filled by the liquid medium and comprises a cross-sectional area in a cross-sectional plane, in which the rotational axis (300) runs, which cross-sectional area corresponds at most to 20 times a cross-sectional area of the delivery face (330) in the cross-sectional plane.

14. Clutch arrangement (100) according to Claim 13, in which the pressing element (620) has a passage opening (305) into the first volume (720) for the liquid medium, which passage opening (305) is arranged along the radial direction at the level of the delivery face (330) or closer to the rotational axis (300), it being possible for the first and/or the second component (280, 290) and the support (390) to be flowed through by the liquid medium in an operating state, in which there is the frictional engagement, with the result that, in the case of a rotation of the delivery face (330) with respect to the liquid medium, a flow of the latter is caused radially to the outside through or along the first and/or the second friction face (230, 240) by way of the delivery face (330).

15. Clutch arrangement (100) according to one of the preceding claims, which, furthermore, has a pressing element (620) which is configured and arranged so as to bring the first and the second frictional face (230, 240) into the frictional engagement with one another and/or to disconnect the frictional engagement upon an actuation, the pressing element (620) having a passage opening (305) into the first volume (720) for the liquid medium, which passage opening (305) is arranged along the radial direction at the level of the delivery face (330) or closer to the rotational axis (300), it being possible for the first and/or the second component (280, 290) and the support (390) to be flowed through by the liquid medium in an operating state, in which there is the frictional engagement, with the result that, in the case of a rotation of the delivery face (330) with respect to the liquid medium, a flow of the latter is caused radially to the outside through or along the first and/or the second friction face (230, 240) by way of the delivery face (330).

## Revendications

1. Ensemble d'embrayage (100), par exemple pour une chaîne cinématique d'un véhicule, avec les caractéristiques suivantes:
un premier composant au moins partiellement en forme de disque (280), qui présente une première face de friction (230) sur la partie en forme de disque;
un deuxième composant au moins partiellement en forme de disque (290), qui présente une face de friction (240) sur la partie en forme de disque, dans lequel la première et la deuxième faces de friction (230, 240) sont configurées et disposées pour pouvoir être amenées en engagement de friction l'une avec l'autre et se trouver en contact avec un fluide liquide dans un fonctionnement;
un composant de transport (340), qui comprend une face de transport (330) pour le fluide liquide, et qui est couplé de façon essentiellement calée en rotation avec un composant d'entraînement (150), de telle manière que la face de transport (330) provoque un courant du fluide liquide lors d'une rotation par rapport au fluide liquide;
dans lequel le composant de transport (340) est en prise par la face de transport (330) avec le premier composant (280), de telle manière que le premier composant (280) soit entraîné en rotation lors d'une rotation du composant de transport (340); et
dans lequel le premier composant (280) est une lamelle intérieure (270).

2. Ensemble d'embrayage (100) selon la revendication 1, dans lequel le premier composant (280) est en prise avec le composant de transport (340) via une face d'entraîneur (320), de telle manière qu'une surface de contact entre la face d'entraîneur (320) et la face de transport (330) occupe au maximum 50 % d'une face de la face de transport (330).

3. Ensemble d'embrayage (100) selon l'une quelconque des revendications précédentes, dans lequel la face de transport (330) est continue et plane.

4. Ensemble d'embrayage (100) selon l'une quelconque des revendications précédentes, dans lequel la face de transport (330) est essentiellement perpendiculaire à une direction tangentielle, qui est perpendiculaire à un axe de rotation (300) du premier composant (280) et à une direction radiale s'écartant perpendiculairement de l'axe de rotation (300).

5. Ensemble d'embrayage (100) selon l'une quelconque des revendications précédentes, dans lequel le composant de transport (340) est de forme essentiellement annulaire.

6. Ensemble d'embrayage (100) selon la revendication 5, dans lequel le composant de transport (340) est réalisé en une seule pièce ou dans lequel le composant de transport (340) comprend une multiplicité de segments de composant de transport (980) en forme de segments annulaires, dans lequel chaque segment de composant de transport (980) en forme de segment annulaire est réalisé en une seule pièce.

7. Ensemble d'embrayage (100) selon la revendication 6, dans lequel le composant de transport (340) ou les segments de composant de transport (980) en forme de segments annulaires sont fabriqués par une déformation d'une pièce en tôle, par un procédé de fabrication par enlèvement de copeaux ou par une technique de coulée.

8. Ensemble d'embrayage (100) selon l'une quelconque des revendications précédentes, dans lequel le composant d'entraînement (150) est un boîtier (110) qui est ou peut être rempli avec le fluide liquide, et dans lequel le composant de transport (340) est relié au boîtier (110) par une liaison essentiellement emboîtée.

9. Ensemble d'embrayage (100) selon la revendication 8, dans lequel le composant de transport (340) est relié au boîtier (110) de façon solidaire en rotation par un assemblage rivé (350) et/ou une liaison par embrochage.

10. Ensemble d'embrayage (100) selon la revendication 8, qui présente en outre un élément de pression (620), qui est configuré et disposé pour, par un actionnement, amener la première et la deuxième faces de friction (230, 240) en engagement de friction l'une avec l'autre et/ou rompre l'engagement de friction, dans lequel le composant de transport (340) est assemblé à l'élément de pression (620) de façon calée en rotation, par exemple par un assemblage rivé (990) et/ou une liaison par embrochage, dans lequel le boîtier (110) est assemblé à un composant de liaison (1015) de façon calée en rotation, par exemple par un assemblage rivé (350) et/ou une liaison par embrochage, et dans lequel le composant de liaison (1015) est assemblé au composant de transport (340) de façon essentiellement calée en rotation, par exemple par un assemblage rivé (1000) et/ou une liaison par embrochage.

11. Ensemble d'embrayage (100) selon la revendication 10, dans lequel le composant de liaison (1015) présente une multiplicité d'éléments de lame de ressort (1010), qui sont assemblés au composant de transport (340) en complémentarité de forme, par exemple par un assemblage rivé (1000) et/ou une liaison par embrochage, pour créer l'assemblage essentiellement calé en rotation entre le composant de transport (340) et le composant de liaison (1015).

12. Ensemble d'embrayage (100) selon l'une quelconque des revendications 8 à 11, dans lequel le premier composant (280) comprend un composant en forme de disque avec un évidement central, dans lequel la première face de friction (230) est disposée sur une surface principale du composant en forme de disque orientée de façon essentiellement perpendiculaire à un axe de rotation (300) du premier composant (280), dans lequel l'engagement avec le composant de transport (340) se produit sur une face latérale d'une partie (310) du composant en forme de disque pénétrant dans l'évidement central, dans lequel le deuxième composant (290) comprend un autre composant en forme de disque avec un évidement central, dans lequel l'autre composant en forme de disque est en prise avec un support (390) sur un rayon extérieur de ce composant.

13. Ensemble d'embrayage (100) selon la revendication 12, qui présente en outre un élément de pression (620), qui est configuré et disposé pour, par un actionnement, amener la première et la deuxième faces de friction (230, 240) en engagement de friction l'une avec l'autre et/ou rompre l'engagement de friction, dans lequel l'élément de pression (620) limite au moins partiellement un premier volume (720) rempli du fluide liquide, qui comprend, dans un plan de section transversale dans lequel l'axe de rotation (300) se trouve, une surface de section transversale qui correspond au maximum à 20 fois une surface de section transversale de la face de transport (330) dans le plan de section transversale.

14. Ensemble d'embrayage (100) selon la revendication 13, dans lequel l'élément de pression (620) présente une ouverture de passage (305) dans le premier volume (720) pour le fluide liquide, qui est disposée le long de la direction radiale à hauteur de la face de transport (330) ou plus près de l'axe de rotation (300), dans lequel le premier et/ou le deuxième composant (280, 290) et le support (390) peuvent être traversés par le fluide liquide dans un état de fonctionnement dans lequel l'engagement de friction est réalisé, de telle manière que, lors d'une rotation de la face de transport (330) par rapport au fluide liquide, un courant de celui-ci radialement vers l'extérieur à travers ou le long de la première et/ou de la deuxième face de friction (230, 240) soit provoqué par la face de transport (330).

15. Ensemble d'embrayage (100) selon l'une quelconque des revendications précédentes, qui présente en outre un élément de pression (620), qui est configuré et disposé pour, par un actionnement, amener la première et la deuxième faces de friction (230, 240) en engagement de friction l'une avec l'autre et/ou rompre l'engagement de friction, dans lequel l'élément de pression (620) présente une ouverture de passage (305) dans le premier volume (720) pour le fluide liquide, qui est disposée le long de la direction radiale à hauteur de la face de transport (330) ou plus près de l'axe de rotation (300), dans lequel le premier et/ou le deuxième composant (280, 290) et le support (390) peuvent être traversés par le fluide liquide dans un état de fonctionnement dans lequel l'engagement de friction est réalisé, de telle manière que, lors d'une rotation de la face de transport (330) par rapport au fluide liquide, un courant de celui-ci radialement vers l'extérieur à travers ou le long de la première et/ou de la deuxième face de friction (230, 240) soit provoqué par la face de transport (330).
